# EUROPÄISCHE PATENTSCHRIFT

(11) **EP 3 872 587 B1**
(45) Veröffentlichungstag und Bekanntmachung des Hinweises auf die Patenterteilung: **12.11.2025**
(21) Anmeldenummer: 20159254.0
(22) Anmeldetag: 25.02.2020
(51) Int. Cl.: G05B 19/4061, G01B 11/00, G01B 21/04

(54) **KOLLISIONSVERMEIDUNG IM ARBEITSRAUM EINES KOORDINATENMESSGERÄTS**
COLLISION AVOIDANCE IN THE WORKING AREA OF A COORDINATE MEASURING DEVICE
PRÉVENTION DE LA COLLISION DANS L'ESPACE DE TRAVAIL D'UN APPAREIL DE MESURE DE COORDONNÉES

(43) Veröffentlichungstag der Anmeldung: 01.09.2021
(73) Patentinhaber: Carl Zeiss Industrielle Messtechnik GmbH, 73447 Oberkochen (DE)
(72) Erfinder: Ritter, Markus, 89520 Heidenheim (DE); Neumann, Matthias, 73642 Welzheim (DE); Kolanek, Christoph, 73430 Aalen (DE); Michler, Erich, 73467 Kirchheim am Ries (DE); Rieger, Stephan, 73447 Oberkochen (DE); Feldengut, Tobias, 40479 Düsseldorf (DE); Hermann, Markus, 73431 Aalen (DE); Neumaier, Kilian, 89520 Heidenheim (DE)
(74) Vertreter: Patentanwälte Bressel und Partner mbB

(56) Entgegenhaltungen:
- EP-A1- 2 919 081
- EP-A1- 3 587 050
- WO-A1-2006/091494
- WO-A1-2019/219202
- DE-A1- 102012 103 627
- US-A1- 2010 268 355
- WOCKE P: "KMG AUTOMATISCH PROGRAMMIEREN. �GENERIERUNG, VISUALISIERUNG UND MODIFIZIERUNG VON ANTASTPUNKTEN UND VERFAHRWEGEN", F & M. FEINWERKTECHNIK MIKROTECHNIK MESSTECHNIK, HANSER, MUNCHEN, DE, vol. 102, no. 4, 1 April 1994 (1994-04-01), pages 181 - 186, XP000446402, ISSN: 0944-1018

## Beschreibung

Die Erfindung betrifft ein Verfahren und eine Anordnung, mit denen Kollisionsrisiken im Arbeitsraum eines Koordinatenmessgeräts reduzierbar sind.

Koordinatenmessgeräte sind in verschiedenster Form aus dem Stand der Technik bekannt. Sie dienen allgemein dazu, räumliche Koordinaten von Messobjekten wie zum Beispiel von industriellen Werkstücken zu erfassen. Dies kann insbesondere durch taktiles Antasten oder optischen Erfassen des Messobjekts erfolgen.

Typischerweise umfassen die Koordinatenmessgeräte einen Messsensor, beispielsweise mit einem taktilen Messtaster oder einen optischen Sensor. Letzterer kann beispielsweise ein Lasersensor (insbesondere Triangulationssensor), ein Streifenlichtsensor oder ein Weißlichtsensor sein.

Um den Arbeitsraum zu erhöhen, innerhalb dem das Messobjekt vermessen werden kann, sind der Messsensor und das Messobjekt in der Regel relativ zueinander bewegbar. Hierfür umfasst das Koordinatenmessgerät eine Kinematik und genauer gesagt wenigstens eine bewegbare Maschinenachse. Beispielsweise kann das Messobjekt relativ zu einem feststehenden Messsensor bewegt werden, zum Beispiel mittels eines Drehtisches. Alternativ oder zusätzlich kann der Messsensor relativ zu dem Messobjekt bewegt werden, zum Beispiel mittels Rotationsachsen und/oder Linearachsen.

Beispiele für Koordinatenmessgeräte mit bewegbaren Messsensoren sind Koordinatenmessgerät nach Portalbauweise oder Ständerbauweise. Allgemein können Koordinatenmessgeräte (auch im Rahmen der vorliegenden Erfindung) wenigstens zwei in einer kinematischen Kette aufeinanderfolgende Bewegungsachsen aufweisen, bevorzugt wenigstens zwei oder wenigstens drei Linearachsen.

Bei Bewegungen des Messsensors im Arbeitsraum eines Koordinatenmessgeräts sind Kollisionen mit im Arbeitsraum vorhandenen Objekten zu vermeiden. Bei diesen Objekten kann es sich nicht nur um das Messobjekt selbst handeln, sondern beispielsweise auch um Sensorwechselmagazine, aus denen verschiedene Messsensoren mit dem Koordinatenmessgerät bedarfsweise verbunden werden können. Ebenso können im Arbeitsraum Aufspannvorrichtungen für das Messobjekt, Paletten oder anderweitige Aufnahmevorrichtungen vorgesehen sein. Derartige Objekte (einschließlich des Messobjekts) können, da sie erwartungsgemäß kein fester Bestandteil des Koordinatenmessgeräts sind, auch als Fremdobjekte bezeichnet werden.

Kollisionen können dabei nicht nur direkt zwischen dem Messsensor und derartigen Objekten auftreten, sondern auch zwischen einem Objekt und anderen bewegbaren Teilen des Koordinatenmessgeräts, zum Beispiel dessen einzelnen Bewegungsachsen.

Es ist bekannt, virtuelle Sicherheitsbereiche zu definieren, die auch als Sicherheitshüllen bezeichnet werden können. Eine Steuereinrichtung zum Steuern von Bewegungen des Koordinatenmessgeräts kann diese virtuellen Sicherheitsbereiche bei der Bahnplanung und/oder Bewegungssteuerung eines Koordinatenmessgeräts berücksichtigen. In Kenntnis der Dimensionen von Bewegungsachsen und Messsensor sowie deren jeweiligen Bewegungsfreiheitsgraden können Bewegungen des Koordinatenmessgeräts derart angepasst werden, dass dieses und insbesondere ein hiervon umfasster Messsensor nicht in den Sicherheitsbereich eintritt.

Die Definition von Sicherheitsbereichen erfordert bisher, dass ein Benutzer manuell Bereiche des Arbeitsraums identifiziert, in denen ein Objekt mit Kollisionspotenzial vorhanden ist. Dies erfordert Erfahrung, Zeit und ist fehleranfällig.

Nachteilig ist dies auch dahingehend, als dass die Sicherheitsbereiche unnötig groß ausfallen und/oder ungünstig positioniert werden können. Verfügbare Bewegungsspielräume des Koordinatenmessgeräts werden dann unnötig reduziert. Hierdurch kann sich die erforderliche Messdauer verlängern.

Die US 2010/0268355 A1 offenbart das 3D-Scannen eines Werkstücks und das darauf basierende Definieren kollisionsfreier Prüfpfade für ein Koordinatenmessgerät.

Die DE 10 2012 103 627 A1 offenbart das Bestimmen der Position und/oder Geometrie von Objekten im Messbereich eines Koordinatenmessgeräts mit einem gesonderten Sensor. Darauf basierend können Bewegungsbereiche eines Messsensors des Koordinatenmessgeräts begrenzt werden.

Die WO 2019/219202 A1 offenbart das Erzeugen eines Prüfplans durch Ermitteln einer Klassenzugehörigkeit eines Messobjekts und eines dieser Klasse zugeordneten objektklassenspezifischen Prüfplans.

Die WO 2006/091494 A1 offenbart ein chirurgisches System mit haptischer Führung der Instrumente, wobei virtuelle Objekte mit virtuellen Grenzbereichen versehen werden, um eine Kollision zu vermeiden.

Weiterer technologischer Hintergrund findet sich in der folgenden Veröffentlichung: Wocke P.: "KMG Automatisch Programmieren. Generierung, Visualisierung und Modifizierung von Antastpunkten und Verfahrwegen", F & M. Feinwerktechnik Mikrotechnik Messtechnik, Hanser, München, DE, Bd. 102, Nr. 4, 1. April 1994, Seiten 181-186, XP000446402, ISSN: 0944-1018, sowie der EP 2 919 081 A1, welche ein Betriebsverfahren für eine Bearbeitungsmaschine, insbesondere eine Werkzeugmaschine, offenbart.

Eine Aufgabe der vorliegenden Erfindung ist daher, das Einrichten virtueller Sicherheitsbereiche bei Koordinatenmessgeräten zu verbessern.

Diese Aufgabe wird durch die Gegenstände der beigefügten unabhängigen Ansprüche gelöst. Vorteilhafte Weiterbildungen sind in den abhängigen Ansprüchen angegeben. Es versteht sich, dass die in der einleitenden Beschreibung erwähnten Merkmale einzeln oder in beliebiger Kombination auch bei der vorliegend offenbarten Lösung vorgesehen sein können, sofern nicht anders angegeben oder ersichtlich.

Die vorliegende Lösung sieht allgemein vor, das Einrichten von Sicherheitsbereichen zwecks Kollisionsvermeidung zu unterstützen und insbesondere mittels sensorischer Arbeitsraumerfassungen zu unterstützen. Gemäß Ausführungsformen können die Sicherheitsbereiche zumindest teilweise automatisch und/oder allgemein maschinell unterstützt eingerichtet werden. Insbesondere können Objekte im Arbeitsraum optisch erfasst und für diese Objekte Sicherheitsbereiche teil- oder vollautomatisch erzeugt werden. Beispielsweise können vordefinierte Sicherheitsbereiche, die sich für ein erfasstes Objekt eignen, auf Basis der Arbeitsraumerfassung ausgewählt werden, sodass die Sicherheitsbereiche nicht mehr für jeden Anwendungsfall vollständig neu erstellt werden müssen. Derartige vordefinierte Sicherheitsbereiche können basierend auf den Erfassungen des Arbeitsraums auch geeignet angepasst oder geändert werden, sodass unnötige Einschränkungen des Bewegungsspielraums des Koordinatenmessgeräts vermieden werden.

Insgesamt ermöglicht die vorliegende Lösung einen sicheren Betrieb von Koordinatenmessgeräten, wobei deren Einrichtungsaufwand durch das unterstützte und zumindest teil-automatische Erstellen bedarfsgerechter Sicherheitsbereiche deutlich reduziert wird.

Insbesondere wird ein Verfahren zur Kollisionsvermeidung im Arbeitsraum eines Koordinatenmessgeräts vorgeschlagen, mit den Merkmalen des beigefügten Anspruchs 1 und u.a. mit:
- (insbesondere wenigstens einmaligem) Erfassen zumindest eines Teils eines Arbeitsraums eines Koordinatenmessgeräts, in dem ein Objekt (mit anderen Worten ein Fremdobjekt) positioniert ist, mit wenigstens einem optischen Überwachungssensor;
- Festlegen von wenigstens einem virtuellen Sicherheitsbereich auf Basis der Erfassung, wobei der Sicherheitsbereich das Objekt zumindest teilweise (zum Beispiel zumindest abschnitts- und/oder bereichsweise und/oder an wenigstens zwei Seiten) umgibt;
- (insbesondere in zumindest einem Betriebsmodus des Koordinatenmessgeräts oder allgemein zumindest vorrübergehend) Steuern von Bewegungen des Koordinatenmessgeräts (insbesondere zum Vermessen eines Messobjekts mit einem Messsensor des Koordinatenmessgeräts), sodass das Koordinatenmessgerät (und insbesondere dessen Messsensor) nicht in den Sicherheitsbereich eintritt oder, anders ausgedrückt, sich ausschließlich außerhalb des Sicherheitsbereichs aufhält.

Sämtliche der vorstehenden aber auch nachstehenden Verfahrensmaßnahmen, Schritte und Funktionen können computergestützt ausgeführt werden, insbesondere mittels einer nachstehend erläuterten Steueranordnung. Allgemein kann es sich also um ein zumindest teilautomatisches Verfahren handeln, das von einem Bediener lediglich initiiert und/oder (abschließend oder nach ausgeführten Zwischenschritten) verifiziert wird.

Es ist aber auch möglich, dass insbesondere die vorstehenden Schritte automatisch bzw. computergestützt ausgeführt werden, weitere hierin geschilderten Schritte aber manuell. Dies kann zum Beispiel auf Ausführungsformen zutreffen, bei denen aus vordefinierten Sicherheitsbereichen eine Auswahl zum Festlegen des virtuellen Sicherheitsbereichs getroffen wird. Beispielsweise kann eine Vorauswahl potenziell geeigneter vordefinierter Sicherheitsbereiche automatisch ermittelt werden und der Benutzer kann aufgefordert werden, eine finale Auswahl zu treffen. Auch im Rahmen einer Objekterkennung können vergleichbare Auswahlen und/oder Bestätigungen bezüglich infrage kommender Objekte oder Objektklassen manuell getroffen werden.

Es ist allgemein drauf hinzuweisen, dass das nicht-Eintreten in den Sicherheitsbereich zumindest in bestimmten Betriebsmodi vorgesehen sein kann, aber nicht zwingend in sämtlichen Betriebsmodi vorgesehen sein muss. Anders ausgedrückt kann das nicht-Eintreten lediglich temporär oder vorübergehend erfolgen. Beispielsweise kann beim Durchführen von allgemeinen Verfahrbewegungen ein nicht-Eintreten in den Sicherheitsbereich vorgegeben sein. In anderen Betriebsmodi kann hingegen das Eintreten in den Sicherheitsbereich erlaubt sein. Dies betrifft zum Beispiel den Fall, dass der Sicherheitsbereich um ein Tastermagazin definiert ist und als Betriebsmodus ein Tasterwechsel aktiviert wird. Dann kann vorübergehend bewusst in den Sicherheitsbereich eingetreten und/oder dieser Sicherheitsbereich deaktiviert werden. Nach Durchführung des Tasterwechsels und Beendigung des entsprechenden Betriebsmodus kann hingegen wiederum ein Eintreten in den (dann aktivierten) Sicherheitsbereich unterbunden werden.

Gemäß der vorgeschlagenen Lösung existiert somit zumindest ein Betriebsmodus, in dem das Eintreten in den Sicherheitsbereich nicht erlaubt ist. Es kann auch vorgesehen sein, dass das Eintreten oder nicht-Eintreten objektspezifisch festgelegt ist, d. h., dass für bzw. bei bestimmte(n) Objekte(n) das Eintreten ermöglicht wird, für bzw. bei andere(n) aber nicht. Auch diese Aufteilung kann abhängig vom gewählten Betriebsmodus definiert sein. Bei einer Objektantastung als Betriebsmodus kann zum Beispiel ein Eintreten in den Sicherheitsbereich des zu vermessenden Objekts erlaubt sein, nicht aber in den Sicherheitsbereich von anderen Störkonturen im Arbeitsraum (zum Beispiel von einem Tastermagazin). Beim oben geschilderten Tasterwechsel kann hingegen Gegenteiliges definiert sein (d. h. in den Sicherheitsbereich des Tastermagazins eingetreten werden, nicht aber in den des Messobjekts).

Das Erfassen kann auch als Abbilden bezeichnet werden bzw. mit einem solchen einhergehen. Insbesondere kann im Rahmen des Erfassens wenigstens eine Bilddatei und/oder wenigstens eine Abbildung des erfassten Teils des Arbeitsraums erzeugt werden und/oder kann dieser Teil optisch aufgezeichnet werden. Insbesondere kann im Rahmen des Erfassens wenigstens eine Bilddatei oder wenigstens ein 3D-Datensatz erzeugt werden.

Allgemein kann die Erfassung zweidimensional erfolgen (2D-Erfassung), können also zweidimensionale Abbildungen, Messwerte oder Koordinaten ermittelt werden. Es ist aber auch möglich, eine dreidimensionale Erfassung (3D-Erfassung) durchzuführen, insbesondere unter Erfassung von Tiefen- oder Höheninformationen zum Beispiel relativ zu einer Messtischoberfläche. Dies kann mit einer Mehrzahl von Überwachungssensoren erfolgen oder aber mit einem einzelnen 3-D-Überwachungsensor, wie z.B. einer Time-of-Flight Kamera.

Insbesondere können auch Erfassungen aus mehreren Richtungen oder Blickwinkeln erfolgen (zum Beispiel mit mehreren Überwachungssensoren oder wenigstens einem bewegbaren Überwachungssensor). Eine Mehrzahl hiervon erfasster Bilder kann dann zum Erzeugen dreidimensionaler Objektdaten verwendet werden (zum Beispiel bei nachstehend geschilderten stereoskopischen Verfahren) und/oder zum Auffinden geeigneter vordefinierter Sicherheitsbereiche.

Sofern hierin von Maßnahmen gesprochen wird, die auf Basis der (Arbeitsraum-) Erfassung durchgeführt werden, kann dies gleichbedeutend damit sein, dass die Maßnahmen auf Basis einer auf Grundlage der Erfassung erzeugten Bilddatei, Abbildung oder Aufzeichnung oder auf Basis eines erfassten 3D-Datensatzes durchgeführt werden. Insbesondere kann dies umfassen oder bedeuten, dass eine auf Basis der Erfassung erzeugte Bilddatei, Abbildung oder Aufzeichnung oder ein 3D-Datensatz zum Durchführen einer jeweiligen Maßnahme analysiert, ausgewertet oder allgemein verarbeitet wird.

Der erfasste Teil des Arbeitsraums kann wenigstens die Hälfte oder wenigstens drei Viertel des Arbeitsraums umfassen (also des entsprechenden Raumvolumens). Zusätzlich oder alternativ kann der erfasste Teil des Arbeitsraums wenigstens die Hälfte oder wenigstens drei Viertel und bevorzugt eine vollständige Arbeitsfläche und/oder einen Messtisch (bzw. dessen Oberfläche) des Koordinatenmessgeräts abbilden. Ein Überwachungssensor mit einem entsprechend großen Erfassungsbereich ermöglicht eine schnelle Erfassung eines relevanten Teils des Arbeitsvolumens mit wenigen Erfassungsvorgängen oder auch mit lediglich einer einzigen Bildaufnahme.

Das Erfassen kann umfassen, dass eine Position, eine Orientierung und/oder wenigstens eine Abmessung des Objekts oder zumindest eines erfassten Objektabschnitts ermittelt wird. Alternativ kann eine solche Ermittlung als ein gesonderter Verfahrensschritt oder eine gesonderte Funktion der nachstehend geschilderten Anordnung realisiert sein und/oder kann eine solche Ermittlung auf Basis der Erfassung durchgeführt werden.

Der Überwachungssensor kann eine Kamera sein, insbesondere eine Digitalkamera. Das Erfassen kann das Belichten eines Kamerasensors (zum Beispiel eines CCD- oder CMOS-Sensors) umfassen. Darauf basierend können die erwähnten Bilddateien oder Abbildungen erzeugt werden, die zum Beispiel Pixelwertmatrizen umfassen bzw. definieren können. Alternativ kann der Überwachungssensor zum Beispiel ein optischer Abstandsmesssensor sein, insbesondere ein Triangulationssensor, eine Time-of-Flight-Kamera oder ein Streifenlichtsensor.

Der Überwachungssensor kann von oder aus dem Arbeitsraum reflektiertes Umgebungslicht und/oder in den Arbeitsraum gesondert eingestrahltes Licht, z.B. Licht mit einem definierten Wellenlängenspektrum, einer definierten Polarisation oder dergleichen optisch erfassen. Auf diese Weise kann die erzielbare Erfassungsgenauigkeit erhöht werden.

Der Überwachungssensor kann statisch oder beweglich sein. Allgemein kann der Überwachungssensor und genauer gesagt ein Erfassungsbereich hiervon auf eine Arbeitsfläche oder, anders ausgedrückt, einen Messtisch des Koordinatenmessgeräts gerichtet sein bzw. diese(n) erfassen. Ist eine Mehrzahl von Überwachungssensoren vorgesehen, können diese voneinander beanstandet sein, optional aber sich überschneidende Erfassungsbereiche aufweisen.

Insbesondere kann jeglicher Überwachungssensor oberhalb der Arbeitsfläche bzw. des Messtisches angeordnet und diese(m) zugewandt und/oder auf diese(n) ausgerichtet sein. Beispielsweise kann ein Überwachungssensor an einem relativ zur Arbeitsfläche oder Messtisch stillstehenden Abschnitt des Koordinatenmessgeräts angeordnet sein.

Alternativ kann der Überwachungssensor zum Beispiel an einem beweglichen Teil des Koordinatenmessgeräts angeordnet sein, beispielsweise an einer Pinole und/oder einer Bewegungsachse des Koordinatenmessgeräts.

Ein beweglicher Überwachungssensor kann mit einem geringeren Erfassungsbereich als ein statischer Sensor realisiert sein, wobei dieser Erfassungsbereich zum Beispiel weniger als die Hälfte oder aber auch maximal ein Drittel des Arbeitsraums und/oder der Arbeitsfläche umfassen kann. Dies kann mit reduzierten Kosten einhergehen. Durch Durchführen mehrerer Bildaufnahmen oder Erfassungsvorgänge bei unterschiedlichen Positionierungen des Überwachungssensors kann der insgesamt erfasste Teil des Arbeitsraums vergrößert werden.

Allgemein ist der Überwachungssensor verschieden von einem Messsensor des Koordinatenmessgeräts. Beispielsweise kann sich der Messsensor dadurch auszeichnen, dass dessen Messsignale und/oder Messwerte zum Ermitteln der schlussendlich ausgegebenen Koordinaten eines Messobjekts verwendet werden, nicht aber diejenige des Überwachungssensors. Der Überwachungssensor kann sich also hingegen dadurch auszeichnen, dass keine Koordinaten des Messobjekts bestimmt werden oder aber lediglich solche, die zur Definition von Sicherheitsbereichen verwendet werden. Allgemein kann der Messsensor eine höhere Erfassungsgenauigkeit und/oder einen kleineren Erfassungsbereich als der Überwachungssensor aufweisen. Beispielsweise kann der Erfassungsbereich des Überwachungssensors denjenigen des Messsensors um wenigstens das zehnfache oder hundertfache übersteigen, insbesondere wenn der Messsensor lediglich für ein Vermessen einzelner Objektpunkte eingerichtet ist.

Weiter können der Überwachungssensor und der Messsensor auf unterschiedlichen physikalischen Messprinzipien beruhen. Beispielsweise kann der Überwachungssensor als optische Strahlung reflektiertes Licht und insbesondere lediglich Licht im sichtbaren Wellenlängenspektrum erfassen, wohingegen der Messsensor prinzipiell nicht optisch (sondern taktil) arbeiten kann und/oder auf Basis von vom Messsensor eingestrahlten Licht und insbesondere Laserlicht. Insbesondere kann der Messsensor verschieden von einem Kamerasensor sein.

Der Überwachungssensor kann eine nicht-telezentrische Optik umfassen, insbesondere ein nicht-telezentrisches Objektiv. Hierdurch kann die Baugröße und können die Kosten reduziert werden. Andererseits ist der Überwachungssensor vorzugsweise in einem Bezugskoordinatensystem kalibriert, insbesondere in einem Maschinenkoordinatensystem (oder auch Basiskoordinatensystem). Auf diese Weise können Orte oder Pixel in aufgenommenen Bildern oder in Datensätzen Orten im Maschinenkoordinatensystem zugeordnet werden.

Es können verschiedene Vorrichtungen zur Vermeidung von optischen Störeinflüssen vorgesehen sein. Beispielsweise kann der Überwachungssensor einen Polarisationsfilter umfassen, insbesondere um eine bestimmte eingestrahlte (Mess-) Strahlung zu erfassen und/oder hiervon abweichende Strahlung herauszufiltern. Alternativ oder zusätzlich kann der Kamerasensor ein farbsensitiver Sensor sein, der nur ein bestimmtes Wellenlängenspektrum an elektromagnetischer Strahlung erfasst. Letzteres stimmt vorzugsweise mit einer (Mess-) Strahlung überein, die zum Beispiel von einer Beleuchtungsvorrichtung eingestrahlt wird. Weiter können Glasflächen möglichst entspiegelt und/oder können Abschirmvorrichtungen zum Mindern des Einflusses von Umgebungslicht vorgesehen sein.

Bei dem Objekt kann es sich, wie einleitend erwähnt, insbesondere um ein Messobjekt handeln, um eine Aufspannvorrichtung, um eine Lagereinrichtung, um eine Werkstückaufnahme und/oder Palette, um einen Drehtisch oder aber um ein Sensorwechselmagazin. Allgemein kann es sich um ein Objekt handeln, das kein fester Bestandteil des Koordinatenmessgeräts ist, sondern beispielsweise lediglich zum Ausführen bestimmter Messaufgaben und dann bevorzugt lediglich lösbar mit diesem verbunden und/oder temporär in dessen Arbeitsraum positioniert wird.

Sind mehrere Objekte im Arbeitsraum vorhanden, können sämtliche hierin offenbarten Maßnahmen auf jedes oder zumindest ausgewählte dieser Objekte angewandt werden, zum Beispiel aufeinanderfolgend oder auch parallel. Werden mehrere Objekte im Rahmen einer einzelnen Arbeitsraumerfassung erfasst, kann ein Segmentierungsverfahren durchgeführt werden, um die Objekte im Weiteren einzelnen zu betrachten. Beispielsweise können infolge einer Objekterkennung einzelne erkannte Objekte und insbesondere damit zusammenhängend Bildbereiche oder Teil-Daten voneinander getrennt (d. h. segmentiert) weiter analysiert werden.

Der Sicherheitsbereich kann zum Beispiel als eine Datei, eine Datensammlung und/oder eine Sammlung von Informationen definiert sein, aus denen die räumliche Erstreckung und/oder Lage des Sicherheitsbereichs abgeleitet werden kann bzw. die dessen Erstreckung und/oder Position definieren. Insbesondere kann der Sicherheitsbereich als eine CAD-Datei definiert sein und folglich auch als CAD-Schutzhülle bezeichnet werden. Im Rahmen der Festlegung des Sicherheitsbereichs können entsprechende Dateninhalte gespeichert und somit festgelegt werden. Allgemein kann unter der Festlegung verstanden werden, dass Eigenschaften des Sicherheitsbereichs definiert werden, die dann für eine spätere Verwendung Gültigkeit besitzen und insbesondere während der Bewegungssteuerung berücksichtigt werden.

Bevorzugt ist der Sicherheitsbereich dreidimensional (3D), kann aber auch lediglich eine zweidimensionale Fläche umfassen. Ferner bevorzugt weist der Sicherheitsbereich ein größeres Volumen und/oder eine größere Fläche als das Objekt oder aber zumindest als ein Objektquerschnitt auf. Die Größe (und genauer gesagt der Größenüberschuss gegenüber dem Objekt) kann nach Maßgabe erwarteter Toleranzen des Objekts, verfügbarer Erfassungsgenauigkeiten (insbesondere des Überwachungssensors) oder aber erforderlicher Abbremsbewegungen des Koordinatenmessgeräts gewählt sein.

Wie nachstehend noch näher ausgeführt, kann bei Ausführungsformen der Erfindung die Größe (also allgemein wenigstens eine Abmessung des Sicherheitsbereichs) auf Basis der Erfassung des Arbeitsraums (Arbeitsraumerfassung) gewählt und/oder angepasst werden. Auf diese Weise kann der Sicherheitsbereich an reale Verhältnisse angeglichen werden und können unnötige Einschränkungen des Bewegungsspielraums des Koordinatenmessgeräts vermieden werden.

Um zu vermeiden, dass das Koordinatenmessgerät (und insbesondere potenziell bewegbare Teile hiervon, wie der Messsensor oder Bewegungsachsen) in den Sicherheitsbereich eintritt, kann auf im Stand der Technik bekannte Ansätze zurückgegriffen werden. Beispielsweise kann eine Steuereinrichtung des Koordinatenmessgeräts eine Bahnplanung vornehmen und dann, wenn die Bewegungsbahn durch einen Sicherheitsbereich verläuft, diese iterativ ändern, bis dies nicht mehr der Fall ist. Vorzugsweise können aber bereits während einer initialen Bahnplanung Abschnitte, die durch einen Sicherheitsbereich verlaufen, als ungültig definiert und/oder ausgeschlossen werden.

Der Sicherheitsbereich kann auch zumindest Teile des Messobjekts selbst umfassen bzw. einhüllen oder enthalten. Hierbei kann es sich zum Beispiel um Bereiche des Messobjekts handeln, die nicht vermessen werden sollen, aber potentielle Hindernisse und somit Kollisionsrisiken für das Koordinatenmessgerät darstellen.

Allgemein ist ein vollständiges Einhüllen oder Umgeben von Objekten durch den Sicherheitsbereich aber nicht zwingend, sondern können auch nur einzelne Seiten oder Bereiche gegenüber dem Koordinatenmessgerät abgeschirmt werden (also kann dieses nur teilweise vom Sicherheitsbereich umgeben sein). Insbesondere kann sich der Sicherheitsbereich zwischen Koordinatenmessgerät und zumindest ausgewählten Bereichen eines Objekts erstrecken, dieses aber nicht vollständig umschließen.

Gemäß einer bevorzugten Ausführungsform von Verfahren und Anordnung kann das Festlegen des virtuellen Sicherheitsbereichs das Festlegen einer Lage und/oder wenigstens einer Abmessung des virtuellen Sicherheitsbereichs umfassen. Unter der Lage kann eine räumliche Lage und insbesondere eine Position und Orientierung im Arbeitsraum verstanden werden. Jegliche hierin erwähnten Koordinaten, Positionen, Orientierungen oder Abmessungen können in einem bzw. in Bezug auf ein Maschinenkoordinatensystem als ein betrachtetes Koordinatensystem oder, mit anderen Worten, als Bezugskoordinatensystem definiert sein.

Wie vorstehend erwähnt, können die Lage oder Abmessungen in einer Datei und/oder als eine Eigenschaft eines CAD-Modells des Sicherheitsbereichs festgelegt werden. Bevorzugt erfolgt im Rahmen der Festlegung eine vollständige dreidimensionale Definition des Sicherheitsbereichs hinsichtlich sämtlicher hiervon umfasster Abmessungen.

Allgemein kann der Sicherheitsbereich ein Volumen mit vorgegebener Form sein (zum Beispiel ein Quader oder Würfel). Diese Form kann das Objekt bevorzugt mit einem vorgegebenen Mindestabstand einhüllen. Hierdurch können Kollisionsrisiken zuverlässig vermieden werden.

Alternativ kann der Sicherheitsbereich die Objektform annähern, aber bevorzugt in einem Abstand hierzu verlaufen. Der einzuhaltende Abstand beispielsweise kann lokal in Bezug auf einzelne Objektabschnitte definiert sein (zum Beispiel in Bezug auf einzelne Flächen, Abschnitte, Geometrieelemente oder dergleichen). Mit einem die Objektform annähernden Sicherheitsbereich können unnötige Beschränkungen des Bewegungsspielraums des Koordinatenmessgeräts begrenzt werden.

Zusammengefasst kann gemäß einem Aspekt des Verfahrens und der Anordnung das Festlegen (des Sicherheitsbereichs) das Festlegen von mehreren Abmessungen des virtuellen Sicherheitsbereichs umfassen und die festgelegten Abmessungen des Sicherheitsbereichs (und/oder das von diesem eingeschlossene Raumvolumen) können größer als erfasste Abmessungen des Objekts sein.

Bei einer Weiterbildung des Verfahrens und der Anordnung wird auf Basis der (Arbeitsraum-) Erfassung eine Objekterkennung (oder, mit anderen Worten, eine Objektklassifikation und/oder Objektzuordnung) durchgeführt, mittels der das Objekt im erfassten Arbeitsraum (also insbesondere in einer erfassten Datei oder einem erfassten Datensatz) erkannt werden kann. Unter dem Erkennen des Objekts kann insbesondere eine Erkennung einer Art des Objekts, einer Klasse des Objekts, einer Baureihe, zu der das Objekt gehört, oder eines Typs des Objekts verstanden werden. Es ist nicht zwingend erforderlich, dass die exakte Identität (zum Beispiel eine Seriennummer) des Objekts festgestellt wird, was optional aber ebenso erfolgen kann.

Allgemein kann die Objekterkennung auch lediglich umfassen, dass als Objekt ein Körper oder Merkmal erkannt wird, der/das verschieden von dem Koordinatenmessgerät ist. Hierbei kann es sich zum Beispiel um einen von einer Arbeitsfläche des Koordinatenmessgeräts hervorstehenden erfassten Bereich handeln, der kein fester Bestandteil der Arbeitsfläche, sondern ein darauf positioniertes Objekt ist. Anders ausgedrückt kann die Objekterkennung auch lediglich die Erkennung der Anwesenheit eines Objekts umfassen, ohne aber zwingend genauere Details hiervon zu ermitteln.

Die Objekterkennung kann auf Basis von während der Arbeitsraumerfassung erfassten Informationen und insbesondere Bildinformationen und/oder Bilddateien durchgeführt werden. Insbesondere können Bildinhalte analysiert und können dem Koordinatenmessgerät nicht zuordenbare Bildinhalte als entsprechende Objekte erkannt werden. Wurde ein Objekt erkannt, können dazugehörige erfasste Informationen (zum Beispiel Pixelwerte oder Daten eines Datensatzes) entsprechend klassifiziert, zusammengefasst, gespeichert oder anderweitig als Objekt markiert werden.

Gemäß einer Variante kann die Objekterkennung per interaktiver Benutzereingabe erfolgen. Beispielsweise kann der Benutzer mittels einer Eingabe- oder Bedienschnittstelle, die zum Beispiel mit einer Steueranordnung der hierin geschilderten Art verbunden ist, Eingaben tätigen. Auf diese Weise kann er beispielsweise das Objekt in einem erfassten Bild identifiziere, es Einrahmen und/oder anderweitig auswählen. Auch kann er eine Auswahl aus einer automatisch erstellten Vorauswahl treffen und/oder eine automatisch vorgenommene Objekterkennung final bestätigen oder anpassen, zum Beispiel durch Anpassen des Bereichs in einem erfassten Bild, der dem Objekt zugeordnet wird.

Ferner allgemein kann eine Objekterkennung auf Basis einer 3D-Erfassung erfolgen. Sind Höheninformationen des leeren Arbeitsraums und insbesondere für eine Objektunterlage (zum Beispiel eine Arbeitsfläche oder Messtischoberfläche) bekannt, können hiervon abweichende und insbesondere dieser gegenüber hervorstehende erfasste Höheninformationen einem Objekt im Arbeitsraum zugeordnet werden. Auf diese Weise kann ein (zum Beispiel von der obigen Unterlage) hervorstehender Bereich des erfassten Arbeitsraums als Objekt erkannt werden.

Eine Höhe oder allgemein Höheninformationen können in Bezug auf eine vertikale Raumachse definiert sein, die entlang der Wirkungsrichtung der Gravitationskraft verläuft. Zusätzlich oder alternativ kann die Höhe bzw. können Höheninformationen in Bezug auf eine Arbeitsfläche und insbesondere Messtischoberfläche des Koordinatenmessgeräts definiert sein und insbesondere in Bezug auf eine orthogonal hierzu verlaufende Achse. Wenigstens eine lineare Bewegungsachse des Koordinatenmessgeräts kann entlang dieser Achse verlaufen. Die Höhe oder Höheinformationen können, insbesondere wenn man eine optische Erfassungseinrichtung als Bezugspunkt wählt, bekanntermaßen ebenso als eine Tiefe bzw. als Tiefeninformationen bezeichnet werden.

Zusätzlich oder alternativ können jegliche der nachfolgenden Varianten zur Objekterkennung vorgesehen sein, allein oder in beliebiger Kombination. Mit diesen Varianten werden überwiegend Höheninformationen ermittelt, die in der vorstehend geschilderten Weise für eine Objekterkennung verwendbar sind. Weiter können einige der Varianten voraussetzen, dass die Arbeitsraumerfassung bereits unmittelbar in einer spezifischen Weise erfolgt, zum Beispiel aus unterschiedlichen Blickrichtungen oder mit spezifischen Überwachungssensoren:
- Objekterkennung auf Basis maschinellen Sehens und/oder mittels optischer Abstandssensoren, insbesondere durch Analysieren hierbei ermittelter Höheninformationen.
- Objekterkennung auf Basis von "Photometric Stereo" (bzw. Photometrisches Stereo), insbesondere mittels "shape from shading": Vorzugsweise wird hierbei das Objekt aus unterschiedlichen Richtungen mit Licht bestrahlt (d. h. beleuchtet) und wird per Bildauswertung analysiert (von im allgemeinen Fall wenigstens einem erfassten Bild je Bestrahlungsrichtung), wie die Objektoberfläche das Licht reflektiert. Insbesondere können auf diese Weise (lokale) Normalenvektoren sowie (lokale) Höhen einer Objektoberfläche bestimmt werden. Bei dem sogenannten "shape from shading" wird lediglich ein Bild mit undefiniert und/oder gleichzeitig aus verschiedenen Richtungen einfallender Bestrahlung bzw. Beleuchtung betrachtet.
- Objekterkennung auf Basis von "Depth from focus" (bzw. Tiefenmessung aus Fokussierungsfolge): Vorzugsweise wird in diesem Fall eine Fokuseinstellung zum Beispiel mittels einer Zoom-Optik des Überwachungssensors geändert und derjenige Fokusabstand, bei dem die größte Schärfe auftritt, zum Ermitteln einer Höheninformation verwendet werden. Alternativ kann eine Variation des Fokusabstandes dadurch erfolgen, dass ein Abstand des Überwachungssensor (dann bevorzugt mit gleichbleibender und/oder unveränderlicher Fokuseinstellung) zu dem Objekt und/oder dem Arbeitsraum variiert wird.
- Objekterkennung auf Basis einer Erfassung durch eine Lichtfeldkamera und/oder Plenoptische Kamera (z.B. jeweils als Überwachungssensor): Vorzugsweise wird in diesem Fall Lichtstrahlung aus unterschiedlichsten Raumrichtungen erfasst und aufgezeichnet, also bildlich gesprochen das größtmögliche Lichtfeld einer Szene. Allgemein kann eine Lichtfeldkamera bzw. plenoptische Kamera im Gegensatz zu einer "normalen" Kamera nicht nur die Lichtintensität der durch eine Optik auf die einzelnen Pixel eines Kamera-Bildsensors auftreffenden Lichtstrahlen in 2D, sondern auch deren Richtung erfassen. Man spricht zum Teil daher von einer 4D-Erfassung des Lichtfeldes (der erfassten Szene). Erreicht wird dies typischerweise dadurch, dass zwischen der "normalen" Optik und dem Bildsensor ein Array von Mikrolinsen angeordnet wird. Aufgrund der Mikrolinsen wird das einfallende Bild (zumindest ausschnittsweise) mehrfach nebeneinander auf dem Bildsensor abgebildet, wobei die mehrfachen Abbildungen in Abhängigkeit von der Richtung der einfallenden Lichtstrahlen gegeneinander verschoben und verzerrt erscheinen. Daher ist es mit einer Lichtfeldkamera möglich, zusätzlich zu der 2D-Position eines aufgenommenen Messpunktes in der Bildebene auch noch die Entfernung zwischen dem Messpunkt und der Kamera zu bestimmen. Infolgedessen ermöglicht die Lichtfeldkamera die Bestimmung einer 3D-Koordinate (und somit insbesondere einer Höheninformation) zu einem oder mehreren ausgewählten Messpunkten bzw. aufgenommenen Bildpunkten anhand des von der Lichtfeldkamera aufgenommenen ersten Bildes.
- Objekterkennung auf Basis von Stereoskopie und insbesondere "Multiview Stereo" (bzw. Mehransichten-Stereoskopie): Vorzugsweise werden hierbei wenigstens zwei oder aber mehr als zwei erfasste Bilder des Arbeitsraums aus unterschiedlichen Blickrichtungen erfasst und werden mittels bekannter Bildauswertealgorithmen 3D-Koordinaten von Punkten (und insbesondere Objektpunkten) im Arbeitsraum ermittelt.
- Objekterkennung auf Basis eines Computermodells (insbesondere Maschinenlernmodells): In diesem Fall kann das Computermodell zum Beispiel ein neuronales Netz umfassen oder ein solches abbilden. Zusätzlich oder alternativ kann es mittels Bildern des Arbeitsraums trainiert werden, um in zukünftig erfassten Bildern zwischen nicht relevanten Bestandteilen des Arbeitsraums und/oder des Koordinatenmessgeräts und im Arbeitsraum positionierten Objekten zu differenzieren. Beispielsweise kann das Computermodell mittels Bildern des leeren Arbeitsraums trainiert werden. Darauf basierend kann z.B. mittels semantischer Segmentierung der Arbeitsraum von vorhandenen Objekten getrennt und die Objekte auf diese Weise erkannt werden. Alternativ oder zusätzlich kann das Trainieren mittels Bildern oftmals im Arbeitsraum positionierter Objekte erfolgen und/oder mittels Bildern, die (insbesondere bewegte) Komponenten des Koordinatenmessgeräts ohne Kollisionsrisiko abbilden (zum Beispiel daran anbringbaren Messsensoren). Erkennt das Computermodell in einem erfassten Bild einen bestimmten Bereich nicht als leeren Arbeitsraum (und/oder als allgemeine Umgebung) oder nicht als Komponente des Koordinatenmessgeräts, und/oder wird dieser Bereich als häufig erwartetes Objekt erkannt, kann der Bereich als Objekt klassifiziert werden.
- Objekterkennung auf Basis einer Texturanalyse: In diesem Zusammenhang kann auf gängige Lösungen der industriellen Bildverarbeitung zurückgegriffen werden, mit denen Texturen von Objektoberfläche optisch erfasst und erkannt werden können. Weist zum Beispiel eine Arbeitsfläche (Messtischoberfläche) des Koordinatenmessgeräts und/oder weisen Komponenten des Koordinatenmessgeräts selbst eine bestimmte Textur auf, können hiervon abweichende Texturen als entsprechendes Objekt erkannt werden.
- Objekterkennung auf Basis einer Analyse von codierten Markern: Vorzugsweise sind die Objekte mit codierten Markern versehen, wie zum Beispiel mit einem QR-Code. Durch optisches Erfassen und Dekodieren des QR-Codes kann dann optional sogar eine genaue Objektidentität oder allgemein eine dem Objekt zugeordnete Informationen festgestellt werden.

Eine Variante sieht vor, dass die Objekterkennung auf Basis eines Differenzbildes durchgeführt wird, wobei das Differenzbild die Differenz enthält zwischen einem ersten Bild, das einen objektfreien Arbeitsraum abbildet (insbesondere denselben, zu einem früheren und leeren Zeitpunkt aufgenommenen Arbeitsraum) und einem zweiten Bild, das den Arbeitsraum mit wenigstens einem darin enthaltenen Objekt abbildet. Das erste und zweite Bild können von dem Überwachungssensor und allgemein während dem Erfassen des Arbeitsraums erzeugt werden bzw. erzeugt worden sein. Diese Variante ermöglicht eine zuverlässige Objekterkennung bei geringem Rechenaufwand.

Allgemein kann jegliche hierin geschilderte Objekterkennung als Grundlage für die Festlegung des Sicherheitsbereichs verwendet werden. Beispielsweise können im Rahmen oder auf Basis der Objekterkennung eine Position, Orientierung und/oder wenigstens eine Abmessung des Objekts ermittelt werden. Darauf basierend kann der Sicherheitsbereich analog positioniert, orientiert und/oder bemessen werden.

Gemäß einer weiteren Ausführungsform des Verfahrens und der Anordnung wird überprüft, ob für ein erfasstes Objekt ein Sicherheitsbereich vordefiniert ist und wenn dies der Fall ist, wird der virtuelle Sicherheitsbereich unter Berücksichtigung des vordefinierten Sicherheitsbereichs festgelegt. Bei dem festgelegten virtuellen Sicherheitsbereich kann es sich, anders ausgedrückt, also um einen resultierenden oder finalen Sicherheitsbereich handeln.

Der vordefinierte Sicherheitsbereich kann zur Festlegung als (finaler) virtueller Sicherheitsbereich hinsichtlich seiner Abmessungen unverändert übernommen werden. Beispielsweise kann lediglich dessen räumliche Position und/oder Orientierung basierend auf der Arbeitsraumerfassung (also insbesondere einer Analyse der vom Arbeitsraum erfassten Bilder und insbesondere darin erkannter Objekte) festgelegt werden. Wie nachstehend noch erläutert, ist es zusätzlich oder alternativ aber auch möglich, dass der vordefinierte Sicherheitsbereich hinsichtlich wenigstens einer Abmessung basierend auf den Ergebnissen der Arbeitsraumerfassung und/oder der Objekterkennung angepasst wird. Auf diese Weise kann der vordefinierte Sicherheitsbereich an tatsächliche Ist-Abmessungen eines vorhandenen Objektes angepasst werden. Dies verbessert die Zuverlässigkeit der Kollisionsvermeidung und kann auch dazu führen, dass der Sicherheitsbereich nicht unnötig groß definiert wird.

Der vordefinierte Sicherheitsbereich kann in einer Datenbank hinterlegt sein (zum Beispiel der nachstehend erläuterten Objektdatenbank). Er kann einem dort hinterlegten Objekt (insbesondere einer erkannten Objektart oder -klasse) und insbesondere einem nachstehend erläuterten erkannten Objektmodell zugeordnet sein. Je nachdem, welches Objekt erfasst und insbesondere erkannt wurde, kann also ein vorab hinterlegter dazugehöriger Sicherheitsbereich ermittelt und zur Definition des schlussendlichen virtuellen Sicherheitsbereichs verwendet werden. Der Begriff "vordefiniert" kann allgemein zum Ausdruck bringen, dass der entsprechende Sicherheitsbereich unabhängig von der Arbeitsraumerfassung definiert ist und/oder zu einem beliebigen Zeitpunkt vor der eigentlichen Arbeitsraumerfassung bereits definiert wurde.

In der Datenbank kann auch eine einzunehmende Relativanordnung von Objekt und Sicherheitsbereich definiert sein. Wurde eine Objektlage im Arbeitsraum ermittelt, kann darauf basierend der vordefinierte Sicherheitsbereich des ermittelten übereinstimmenden Objekts anhand dieser Relativanordnung aufwandsarm geeignet ausgerichtet werden.

Insbesondere kann also vorgesehen sein, dass das Überprüfen, ob für ein erfasstes Objekt ein Sicherheitsbereich vordefiniert ist, mittels einer Objektdatenbank erfolgt. Vorzugsweise wird dann, wenn eine Übereinstimmung wenigstens einer erfassten Objekteigenschaft mit einem Eintrag der Objektdatenbank ermittelt wird, ein vordefinierter Sicherheitsbereich ausgewählt, der dem übereinstimmenden Eintrag aus der Objektdatenbank zugeordnet ist. Mit anderen Worten kann das erfasste Objekt (insbesondere wenigstens ausgewählte erfasste Eigenschaften hiervon und/oder etwaige erfasste 3D-Koordinaten des Objekts), mit Einträgen einer Objektdatenbank verglichen werden (insbesondere mit dort hinterlegten Objekten und/oder Eigenschaften, die spezifischen Objekten zugeordnet sind), und wenn eine Übereinstimmung vorliegt, kann ein zugeordneter vordefinierter Sicherheitsbereich ausgewählt werden. Wenn keine Übereinstimmung vorliegt, kann der virtuelle Sicherheitsbereich zum Beispiel auf Basis erfasster Objekteigenschaften festgelegt werden.

Bei dieser Variante ist es im Gegensatz zum nachstehend erläuterten Vorgehen nicht zwingend erforderlich, ein dreidimensionales Objektmodell auf Basis der Objekterfassung zu erzeugen, sondern können auch lediglich ausgewählte Eigenschaften und insbesondere erfasste zweidimensionale Eigenschaften oder Ansichten eines Objekts betrachtet werden. Weisen die Objekte der Objektdatenbank (die dort aber dennoch als vorzugsweise dreidimensionale Objektmodelle der hierin offenbarten Art hinterlegt sein können) vergleichbare Eigenschaften oder Ansichten auf, kann eine Übereinstimmung festgestellt werden.

Beispielsweise können zweidimensionale Objektansichten aus der Arbeitsraumerfassung erhalten werden und kann überprüft werden, ob diese Ansichten einem hinterlegten Objekt zuordenbar sind bzw. mit diesem übereinstimmen. Anders formuliert kann gemäß einem Aspekt des Verfahrens und der Anordnung im Rahmen der Erfassung wenigstens eine zweidimensionale Objektansicht erfasst werden und kann diese Objektansicht mit der Objektdatenbank verglichen werden (d.h. um ein überstimmendes dort hinterlegtes Objekt zu ermitteln).

Ferner kann in diesem Zusammenhang eine festzulegende Position und/oder Orientierung des Sicherheitsbereichs auf Basis des übereinstimmenden Objekts ermittelt werden.

Beispielsweise kann anhand der zweidimensionalen Ansicht auf eine Relativanordnung von hierzu übereinstimmendem Objekt und Überwachungssensor geschlossen werden. In Kenntnis von Dimensionen des Objekts, wie zum Beispiel in der Objektdatenbank hinterlegt, kann dann eine Objektlage im Arbeitsraum ermittelt und genauer gesagt berechnet werden. Auf diese Weise können auf Basis einer aufwandsarmen 2D-Erfassung dennoch dreidimensionale Eigenschaften des Objekts und/oder des festzulegenden Sicherheitsbereichs bestimmt werden.

In der Objektdatenbank können die Objekte, wie erwähnt, als Objektmodelle (zum Beispiel als dreidimensionale CAD-Objektmodelle) definiert sein oder aber können lediglich ausgewählte vorzugsweise dreidimensionale Eigenschaften einzelner Objekte zum Beispiel als ein einzelner Objektdatensatz hinterlegt sein.

Das Überprüfen mittels einer Objektdatenbank ermöglicht einen hohen Automatisierungsgrad, da keine oder nur begrenzte Benutzereingaben erforderlich sind. Auch wird hierdurch das Risiko von Fehldefinitionen des Sicherheitsbereichs gemindert, da für häufig im Arbeitsraum positionierte Objekte beispielsweise durch einen Hersteller des Koordinatenmessgeräts geeignete Sicherheitsbereiche vorab definiert werden können.

Der vordefinierte Sicherheitsbereich kann als virtueller Bereich um ein Objektmodell und insbesondere um ein CAD-Modell des Objekts definiert sein. Analog wie zum allgemein (finalen) Sicherheitsbereich vorstehend erläutert, kann es sich um eine Hülle um das Objekt bzw. Objektmodell handeln. Insbesondere kann also der finale virtuelle Sicherheitsbereich ein gegenüber der vordefinierten bzw. vorab hinterlegten Variante angepasster virtueller Bereich oder aber ein angepasstes virtuelles CAD Modell sein.

Wie vorstehend bereits erläutert, ist gemäß einer weiteren Ausführungsform des Verfahrens und der Anordnung zum Festlegen des virtuellen Sicherheitsbereichs wenigstens eine Abmessung des vordefinierten Sicherheitsbereichs anhand wenigstens einer erfassten Objektabmessung anpassbar. Wie erwähnt, kann die Arbeitsraumerfassung und insbesondere Objekterkennung allgemein mit dem Erfassen oder Ermitteln wenigstens einer Objektabmessung einhergehen. Diese können mit Abmessungen des vordefinierten Sicherheitsbereichs verglichen werden und bei Abweichungen können Abmessungen des vordefinierten Sicherheitsbereichs an die tatsächlich erfassten angepasst werden.

Ebenso erwähnt wurde bereits als eine weitere Ausführungsform des Verfahrens und der Anordnung, dass zum Festlegen des virtuellen Sicherheitsbereichs eine Lage (d. h. Position und Orientierung) des vordefinierten Sicherheitsbereichs anhand der Erfassung (d. h. Arbeitsraumerfassung) anpassbar sein kann.

Zu betonen ist, dass die geschilderten Anpassungen des vordefinierten Sicherheitsbereichs vorzugsweise automatisch oder, mit anderen Worten, benutzerautonom durchgeführt werden, beispielsweise von der hierin erwähnten Steueranordnung. Die Anpassungen können auf Basis von Vergleichen der für den Sicherheitsbereich vordefinierten Eigenschaften (insbesondere Lage und Abmessung) mit entsprechenden erkannten, erfassten und/oder ermittelten Eigenschaften eines Objekts verglichen werden. Insbesondere können die Eigenschaften des vordefinierten Sicherheitsbereichs an die erfassten Eigenschaften angepasst und vorzugsweise angeglichen werden. Der entsprechend angepasste bzw. angeglichene Sicherheitsbereich kann dann als (finaler) virtueller Sicherheitsbereich gespeichert und dadurch festgelegt werden. Dieser kann dann bei der weiteren Bahnplanung als ein für Bewegungen oder Aufenthalte des Koordinatenmessgeräts ungültiger Bereich berücksichtigt werden.

Bei oder auf Basis einer 3D-Erfassung erfasste dreidimensionalen Eigenschaften des Objekts können zum Erzeugen eines dreidimensionalen Modells des Objekts verwendet werden. Dieses Objektmodell kann insbesondere ein CAD-Modell sein. Prinzipiell ist es aber auch möglich, dass das Objektmodell einem zweidimensionalen Grundriss oder einer Draufsicht auf das erfasste Objekt entspricht, der/die mit einer Information zur Objekthöhe als dritte Dimension kombiniert. Es muss sich also nicht zwingend um eine vollständige ortsaufgelöste räumliche Definition des Objekts handeln.

Bei jeglichem hierin geschilderten Objektmodell kann es sich um einen virtuellen Datensatz handeln, der die Form und/oder Abmessungen des Objekts abbildet oder beschreibt. Durch eine entsprechende Modelldefinition kann die Genauigkeit beim Festlegen des Sicherheitsbereichs zusätzlich verbessert werden, bspw. da dieser dann präzise an die tatsächliche Objektform anpassbar ist. Weiter kann hierdurch das Auffinden relevanter vordefinierter Sicherheitsbereiche erleichtert werden, wie beispielhaft im Zusammenhang mit der Objektdatenbank vorstehend geschildert.

Insbesondere sieht ein Aspekt des Verfahrens und der Anordnung vor, dass zum Überprüfen, ob für ein erfasstes Objekt ein Sicherheitsbereich vordefiniert ist, ein erzeugtes Objektmodell und/oder ermittelte dreidimensionale Eigenschaften des Objekts mit Einträgen einer Objektdatenbank verglichen werden, wobei die Einträge ebenfalls Objektmodelle sind. Vorzugsweise wird dann, wenn eine Übereinstimmung vorliegt, ein vordefinierter Sicherheitsbereich ausgewählt, der dem übereinstimmenden Objektmodell aus der Objektmodelldatenbank zugeordnet ist. Liegt hingegen keine Übereinstimmung vor, wird der virtuelle Sicherheitsbereich bevorzugt auf Basis (erfasster) dreidimensionaler Eigenschaften des Objekts festgelegt.

Jegliche hierin geschilderte Objektdatenbank kann in einer Speichereinrichtung zum Beispiel des Koordinatenmessgeräts oder aber von einer nachstehend geschilderten Steueranordnung hinterlegt sein. Die Einträge der Datenbank können Objekte, Objekteigenschaften oder Objektmodelle sein, die bevorzugt gleichartige Dateiformate und/oder Definitionsarten aufweisen, wie entsprechende auf Basis der Arbeitsraumerfassung erzeugte (Vergleichs-) Informationen. Eigenschaften eines erzeugten und/oder hinterlegten Objektmodells, wie zum Beispiel die dreidimensionale Form, zumindest ausgewählte Abmessungen oder ein Grundriss, können dann besonders effektiv verglichen werden.

Eine Übereinstimmung verglichener Objekte bzw. Objektmodelle kann dann vorliegen, wenn verglichene Eigenschaften (zum Beispiel Formen, Draufsichten/Grundrisse, Abmessungen o. ä.) nicht über eine zulässige Abweichung hinaus voneinander abweichen. Bei einem Überschreiten der zulässigen Abweichung kann hingegen keine Übereinstimmung festgestellt werden. Prinzipiell ist es auch möglich, Sicherheitsbereiche nach Maßgabe der festgestellten Abweichung anzupassen (insbesondere, wenn diese unterhalb der zulässigen Abweichung liegt), beispielsweise entsprechend zu verkleinern, zu vergrößern oder dessen Form zu ändern.

Die Überprüfung hinsichtlich etwaiger Übereinstimmungen kann auf Basis jeglicher der folgenden Ansätze und/oder Algorithmen ausgeführt werden, allein oder in beliebiger Kombination,:
- "Shape Based Matching" (bzw. formbasiertes Zuordnen): Vorzugsweise werden in diesem Fall zur Formbeschreibung Eckpunkte und/oder Kanten (oder auch "Edges") von Datensätzen oder Modellen ermittelt (zum Beispiel per 3D-Auswertealgorithmen und/oder auf Basis von Gradienten). Die Eckpunkte und/oder Kanten werden dann als Vergleichsmerkmale verwendet, um Übereinstimmungen von Objekten und insbesondere Objektmodellen zu prüfen. Hierbei können zum Beispiel Kantenlängen, Kantenpositionen oder Kantenverläufe bzw. Eckpunktpositionen oder Eckpunktabstände betrachtet werden.
- "Texture Based Matching" (bzw. texturbasiertes Zuordnen): Erfasste Objektdaten und/oder erzeugte Objektmodelle können um Texturinformationen angereichert werden. Als zu vergleichende Textureigenschaften kann zum Beispiel eine Dichte oder Verteilung von Texturmerkmalen verglichen werden. Zusätzlich oder alternativ ist es auch möglich, die Texturinformationen separat zu speichern, zum Beispiel als Bilddateien, die vorzugsweise dann entsprechenden Modellen zugeordnet sind. In erfassten Bildern kann dann nach entsprechenden Texturen gesucht werden.
- "3D Matching" (bzw. dreidimensionales Zuordnen): In diesem Fall können zum Beispiel Punktewolken oder anderweitige Strukturmerkmale der Objekte bzw. Objektmodelle miteinander verglichen und insbesondere Abweichungen hierzwischen ermittelt werden.
- Maschinenlernmodell (insbesondere neuronales Netz): In diesem Fall können dem Maschinenlernmodell während einer Trainingsphase Objekte oder Objektmodelle bereitgestellt werden (insbesondere zumindest paarweise), die als übereinstimmend eingestuft sind, zum Beispiel von einem menschlichen Experten. Optional können aber auch nicht übereinstimmende Objekte oder Objektmodelle zwecks Trainieren des maschinellen Modells bereitgestellt werden.
- "Nearest Neighbor Search" (bzw. Nächste-Nachbarn-Suche oder auch - Klassifikation): Vorzugsweise werden in diesem Fall Merkmalsvektoren definiert, die vorbestimmte Merkmale bzw. Eigenschaften eines jeweiligen Objekts oder Objektmodells enthalten, zum Beispiel Abmessungen in bestimmten Raumdimensionen. Alternativ oder zusätzlich können Längenverhältnisse, zum Beispiel von Hauptachsen eines Grundrisses von Aufnahmevorrichtungen, oder eine Anzahl von Öffnungen und/oder Aufnahmebereichen als Eigenschaften betrachtet werden. Ein Objekt oder Objektmodell kann dann demjenigen Datenbank-Eintrag als übereinstimmend zugeordnet werden, zu deren Merkmalsvektor die geringsten Abweichungen vorliegen, insbesondere sofern diese Abweichungen maximal zulässige Abweichungen nicht überschreiten.
- Bayesches Klassifikationsverfahren: Vorzugsweise wird in diesem Fall auf bekannte Algorithmen nach Art eines Bayes-Klassifikators zurückgegriffen. Diese können wahrscheinlichkeitsbasierte Zuordnungen zwischen Objekten oder Objektmodellen vornehmen, um Übereinstimmungen zu identifizieren. Dies kann erneut auf Basis (vorzugsweise automatisch) identifizierter Merkmale/Eigenschaften jeglicher hierin geschilderten Art der einzelnen Objektmodelle stattfinden.

Dadurch, dass zunächst die Übereinstimmung mit hinterlegten Datenbankeinträgen überprüft wird, wird die Möglichkeit geschaffen, schnell geeignete Sicherheitsbereiche bestenfalls ohne weitere Anpassungen zu übernehmen. Hierdurch können erwartungsgemäß bessere Ergebnisse in kürzerer Zeit erzielt werden, als wenn stets für jedes erfasste Objekt individuelle Sicherheitsbereiche neu erstellt werden würden. Letzteres kann aber dadurch, dass dreidimensionale Eigenschaften des Objekts auf Basis der Arbeitsraumerfassung ermittelbar sind, dennoch präzise erfolgen.

Die Erfindung betrifft auch eine Anordnung, mit den Merkmalen von Anspruch 14 und u.a.mit:
- einem Koordinatenmessgerät,
- wenigstens einem optischen Überwachungssensor, der dazu eingerichtet ist, zumindest einen Teil eines Arbeitsraums des Koordinatenmessgeräts zu erfassen, in dem ein Objekt positionierbar ist; und
- einer Steueranordnung, die dazu eingerichtet ist, wenigstens einen virtuellen Sicherheitsbereich auf Basis der Erfassung festzulegen, wobei der Sicherheitsbereich das Objekt zumindest teilweise umgibt, und die ferner dazu eingerichtet ist, zumindest vorrübergehend Bewegungen (insbesondere eines Messsensors) des Koordinatenmessgeräts zu steuern, sodass das Koordinatenmessgerät nicht in den Sicherheitsbereich eintritt.

Die Anordnung kann jegliche Weiterbildung und jegliches weitere Merkmal umfassen, um sämtliche der vorstehenden und nachstehenden Verfahrensschritte, Betriebszustände und Funktionen bereitzustellen oder auszuführen. Insbesondere kann die Anordnung dazu eingerichtet sein, ein Verfahren gemäß jeglichem der vorstehenden und nachstehenden Aspekte auszuführen. Sämtliche der vorstehenden Erläuterungen zu und Weiterbildungen von Verfahrensmerkmalen können bei den gleichlautenden Anordnungsmerkmalen ebenso vorgesehen sein bzw. auf diese zutreffen.

Die Steueranordnung kann wenigstens eine Steuereinrichtung (oder ein Steuergerät) umfassen oder als eine solche realisiert sein. Es kann sich aber auch um eine mehrteilige Steueranordnung handeln, die mehrere Steuereinrichtungen umfasst, die beispielsweise räumlich verteilt sind und/oder miteinander über Datenleitungen kommunizieren können. Insbesondere kann die Steueranordnung (zum Beispiel als einzige oder aber als eine von mehreren Steuereinrichtungen) die Steuereinrichtung des Koordinatenmessgeräts umfassen, mit der vorzugsweise auch die Bewegungssteuerung erfolgt.

Gemäß einer Ausführungsform umfasst die Steueranordnung wenigstens zwei Steuereinrichtungen, beispielsweise eine erste für eine Auswertung der Arbeitsraumerfassung und/oder einem darauf basierenden Festlegen des virtuellen Sicherheitsbereichs und eine zweite für die Bewegungssteuerung. Optional kann die erste Steuereinrichtung auch eine Bahnplanung für die auszuführenden Bewegungen durchführen. Die erste Steuereinrichtung kann ein herkömmlicher PC und/oder kein fester Bestandteil des Koordinatenmessgeräts sein. Bei der zweiten Steuereinrichtung kann es sich um eine Steuereinrichtung des Koordinatenmessgeräts handeln.

Die Steueranordnung, insbesondere aber jegliche hiervon umfasste Steuereinrichtung, kann allgemein digital und/oder elektronisch betreibbar sein. Sie kann wenigstens einen Prozessor aufweisen (zum Beispiel einen Mikroprozessor). Ferner kann sie wenigstens eine (digitale) Speichereinrichtung aufweisen. Der Prozessor kann dazu eingerichtet sein, Programmcode, der zum Beispiel auf der Speichereinrichtung hinterlegt ist, auszuführen, und dadurch die Steueranordnung zum Ausführen der hierin geschilderten Maßnahmen zu veranlassen.

Im Folgenden werden Ausführungsformen der Erfindung anhand der beigefügten schematischen Figuren erläutert. In Ihrer Art und/oder Funktion übereinstimmende Merkmale können dabei figurenübergreifend mit den gleichen Bezugszeichen versehen sein. Es stellen dar:
- Fig. 1:: eine Ansicht einer erfindungsgemäßen Anordnung gemäß einem Ausführungsbeispiel, mit der beispielhafte erfindungsgemäße Verfahren ausgeführt werden;
- Fig. 2A: ein Ablaufschema eines mit der Anordnung aus Figur 1 ausgeführten Verfahrens, bei dem zweidimensionale Erfassungen eines Arbeitsraums ausgeführt werden;
- Fig. 2B: ein Ablaufschema eines mit der Anordnung aus Figur 1 ausgeführten Verfahrens, bei dem dreidimensionale Erfassungen eines Arbeitsraums ausgeführt werden.

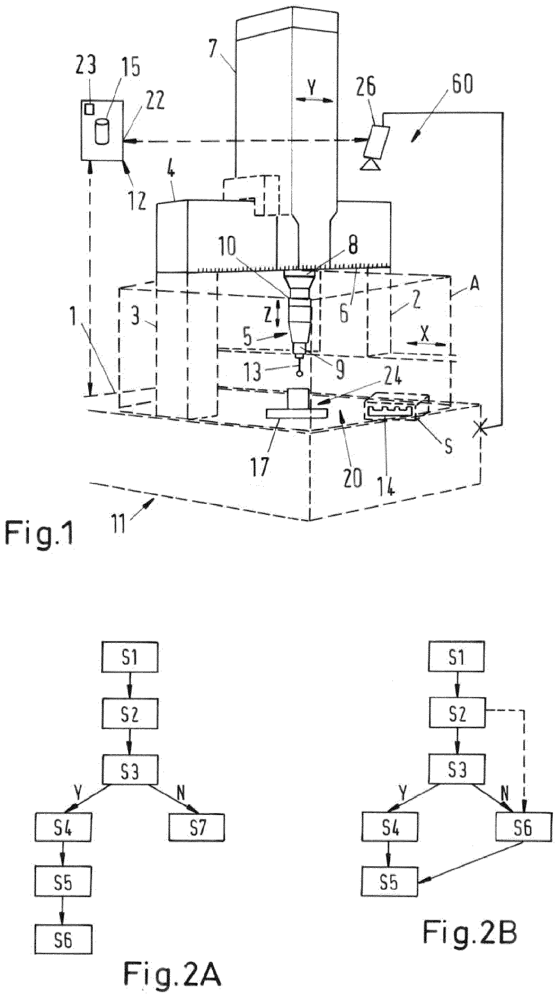

In Figur 1 ist eine erfindungsgemäße Anordnung 11 gezeigt, die ein Koordinatenmessgerät (KMG) 60 umfasst. Das KMG 60 dient allgemein dazu, ein Messobjekt 24 durch Erfassen dreidimensionaler Koordinaten ausgewählter Oberflächenpunkte zu vermessen.

In prinzipiell bekannter Weise ist das KMG 60 in Portalbauweise ausgebildet und umfasst einen Messtisch 1, dessen Oberfläche (also dessen einem Messsensor 9 zugewandte Seite/Oberfläche) eine Arbeitsfläche des KMG 60 ist. Über dem Messtisch 1 sind Säulen 2, 3 verfahrbar, die zusammen mit einem Querträger 4 ein Portal des KMG 60 bilden. Der Querträger 4 ist an seinen gegenüberliegenden Enden mit den Säulen 2 bzw. 3 verbunden, die auf dem Messtisch 1 längsverschieblich gelagert sind.

Der Querträger 4 ist mit einem Querschlitten 7 kombiniert, welcher zum Beispiel luftgelagert entlang dem Querträger 4 (in Y-Richtung) beweglich ist. Die momentane Position des Querschlittens 7 relativ zu dem Querträger 4 kann anhand einer Maßstabsteilung 6 festgestellt werden. Auch bei den anderen Achsen können derartige Maßstäbe verwendet werden. An dem Querschlitten 7 ist eine in vertikaler Richtung (also entlang einer Höhenachse Z) bewegliche Pinole 8 gelagert, die an ihrem unteren Ende über eine Sensorschnittstelle 10 mit einem taktilen Messsensor 9 verbunden ist.

Sämtliche der geschilderten Verfahrbewegungen bzw. Verschieblichkeiten werden durch nicht im Detail dargestellte lineare Bewegungsachsen ermöglicht, die jeweils wenigstens eine Antriebseinheit umfassen und deren mechanische Führungen entlang der dargestellten Pfeile X, Y, Z verlaufen.

Der Messsensor 9 umfasst einen Sensorkopf 5, der einen Taststift 13 trägt. Der Sensorkopf 5 enthält sensorische Einheiten, um Auslenkungen des Taststiftes 13 im Rahmen einer Objektantastung zu erfassen. Anstelle des taktilen Messsensors 9 könnte ebenso ein berührungslos abtastender (d.h. optischer) Messsensor vorgesehen sein, insbesondere ein Lasersensor (z.B. ein Weißlichtsensor).

Auf dem Messtisch 1 ist optional ein zusätzlicher drehbarer Drehtisch 17 angeordnet. Auf diesem ist das zu vermessende Messobjekt 24 angeordnet und durch Drehung des Drehtisches 17 um eine vertikale Drehachse drehbar. Ferner ist auf dem Messtisch 1 ein Sensorwechselmagazin 14 angeordnet, in dem z.B. verschiedene Taststifte 13 oder aber auch komplette taktile Messsensoren 9 samt Sensorkopf 5 anordenbar sind (jeweils nicht gezeigt), die gegen die entsprechende aktuell am KMG 60 angebrachten Einheiten ausgetauscht werden können.

Im Rahmen dieser Offenbarung kann ein am KMG 60 montierter Messsensor 9 als Bestandteil des KMGs 60 betrachtet werden, insbesondere zwecks Kollisionsvermeidung bei der Bewegungsplanung.

Das Sensorwechselmagazin 14 aber auch das Messobjekt 24 sind jeweils separat vom KMG 60 bereitgestellte Objekte 20. Diese befinden sich jeweils innerhalb eines (virtuellen) Arbeitsraums A und werden dort lediglich bedarfsweise angeordnet. Der Drehtisch 13 kann zwar eine zusätzliche Bewegungsachse des KMG 60 bilden, stellt aber ebenfalls ein auf dem Messtisch 1 sowie im Arbeitsraum A zusätzlich und insbesondere lediglich bedarfsweise bereitgestelltes Objekt 20 dar.

Der Arbeitsraum A enthält sämtliche Positionen, an denen Koordinatenmessungen durch das KMG 60 vornehmbar sind. Er kann durch sämtliche von der Sensorschnittstelle 10 und/oder einem aktuell daran angebrachten Messsensor 9 anfahrbaren (Mess-) Positionen aufgespannt werden. Lediglich beispielhaft erkannt man, dass der Arbeitsraum A quaderförmig ist und nahezu den gesamten (optional auch den gesamten) Messtisch 1 abdeckt. Weiter erstreckt er sich nach Maßgabe des Verfahrweges der Pinole 8 entlang der Höhenachse Z.

Ferner zeigt Fig. 1 schematisch eine Steueranordnung 12, die lediglich beispielhaft nur eine einzelne Steuereinrichtung umfasst, nämlich eine Steuereinrichtung 22 des KMG 60. Die Steuereinrichtung 22 ist ein Computer, der über wenigstens einen Prozessor 23 und zumindest einen Datenspeicher 15 verfügt. Die Steuereinrichtung 22 ist über Signal- und Steuerleitungen mit ansteuerbaren Komponenten des Koordinatenmessgerätes 60 verbunden, insbesondere mit den Antriebseinheiten der Bewegungsachsen. Außerdem ist die Steuereinrichtung 22 über eine Messdatenverbindung mit denjenigen Elementen des KMG 60 verbunden, die zur Ermittlung Messwerten eingesetzt werden. Da derartige Elemente und Einrichtungen auf dem Gebiet von Koordinatenmessgeräten 60 allgemein bekannt sind, wird hier nicht näher darauf eingegangen.

In dem Arbeitsraum A sind verschiedene virtuelle Sicherheitsbereiche S definierbar, von denen einer beispielhaft gezeigt ist. Dieser hüllt das Sensorwechselmagazin 14 ein. Die Sicherheitsbereiche S stellen ungültige Bereiche für Aufenthalte von Komponenten des Koordinatenmessgeräts 60 und insbesondere von dessen Pinole 8 und/oder Messsensor 9 dar. Im Rahmen einer Bahnplanung oder allgemein beim Überprüfen von auszuführenden Bewegungen können Bewegungen als ungültig oder nicht ausführbar erkannt werden, wenn diese zu Bewegungen des Koordinatenmessgerät 60 in den Sicherheitsbereich S hineinführen würden. Der Bewegungsspielraum des Koordinatenmessgerät 60 wird durch die Sicherheitsbereiche S also bewusst eingeschränkt, um Kollisionen mit Objekten 20 im Arbeitsraum A zu vermeiden.

Die Anordnung 11 umfasst auch wenigstens einen Überwachungssensor 26. Hierbei handelt es sich beispielhaft um eine Digitalkamera, die datenübertragend mit der Steuereinrichtung 22 verbunden ist. Der Überwachungssensor 26 ist auf die Arbeitsfläche bzw. den Messtisch 1 ausgerichtet. Weiter weist der Überwachungssensor 26 einen Erfassungsbereich auf, der sich derart und zum Beispiel trichterförmig ausgehend von dem Überwachungssensor 26 aufweitet, dass er den Arbeitsraum A bevorzugt größtenteils oder auch vollständig erfassen kann. Schematisch angedeutet ist, dass der Überwachungssensor 26 feststehend an dem Messtisch 1 montiert sein kann.

Beispielhaft wird im Folgenden von einem Erfassen einzelner zweidimensionaler Bilder und zweidimensionaler Daten durch den Überwachungssensor 26 ausgegangen. Zur Erhöhung der verfügbaren Ansichten eines Objekts 20 können aber auch mehrere entsprechende Überwachungssensoren 26 vorgesehen sein oder wenigstens ein in unterschiedliche Stellungen relativ zum Arbeitsraum A bewegbarer Überwachungssensor 26. Alternativ und wie anhand der nachstehenden Figur 2B erläutert, kann aber auch wenigstens ein Überwachungssensor 26 vorgesehen sein, der Tiefeninformationen des Arbeitsraums A sowie darin positionierte Objekte 20 erfassen kann und folglich eine 3D-Erfassung vornimmt.

Im beispielhaften zweidimensionalen Fall erfasst der Überwachungssensor 26 Bildaufnahmen der Messtischoberfläche. Somit erfasst er auch die dort angeordneten Objekte 20. Die Bildaufnahmen (oder auch Bilddateien) werden dann an die Steuereinrichtung 22 übermittelt. Diese führt zunächst eine Objekterkennung gemäß jeglicher der vorstehend geschilderten Varianten durch, um innerhalb der abgebildeten Bildinformationen einen Bereich zu ermitteln, der einem entsprechenden Objekt 20 zuzuordnen ist. Genauer gesagt ermittelt die Steuereinrichtung diejenigen Pixel innerhalb einer Pixelmatrix eines Bildes, die einem Objekt 20 zuzuordnen sind. Je nach dem durchgeführten Verfahren zur Objekterkennung, können auch mehrere Überwachungssensoren 26 und/oder können zusätzliche Beleuchtungsquellen erforderlich sein.

Die Steuereinrichtung 22 ist auch dazu eingerichtet, eine Position, Orientierung und/oder eine räumliche Ausdehnung in wenigstens einer Raumebene eines erkannten Objekts zu bestimmen. Dies kann im Rahmen der Objekterkennung erfolgen, aber auch unabhängig hiervon auf Basis einer Bildaufnahme des Objekts 20 bzw. des Arbeitsraums A und/oder anhand einer nachstehend erläuterten Bestimmung dreidimensionaler Eigenschaften oder dem Erzeugen dreidimensionaler Objektmodelle. Bevorzugt wird, dass spätestens dann, wenn der Sicherheitsbereich S festgelegt werden soll (zum Beispiel durch Anpassen eines vordefinierten Sicherheitsbereichs S) Informationen zur Position und Orientierung des Objekts 20 ermittelt werden.

Wurde ein Objekt 20 erkannt, wird hierfür ein Sicherheitsbereich S ermittelt. Prinzipiell kann dies auf Basis bereits erfasster oder auch nachträglich erfasster 3D-Daten des Objekts 20 erfolgen. Wie nachstehend erläutert, erfolgt dies bevorzugt anhand eines Ermittelns geeigneter vordefinierter Sicherheitsbereiche S.

Bezugnehmend auf die Figuren 2A-B werden im Folgenden Ablaufschemata eines Verfahrens geschildert, die mit der Anordnung 11 aus Figur 1 ausführbar sind. Die Schrittfolgen stellen jeweils keine zwingende zeitliche Abfolge dar. Insbesondere können einzelne Schritte zumindest teilweise gleichzeitig oder in abweichender Reihenfolge ausgeführt werden. Sofern im Folgenden von einer automatischen Ausführung einzelner Schritte gesprochen wird, kann darunter eine Steuerung, Durchführung und/oder Veranlassung dieser Schritte durch die Steueranordnung 12 verstanden werden.

Im Folgenden werden anfängliche Erfassungen des Arbeitsraums A, bei denen dreidimensionale Eigenschaften und insbesondere Tiefeninformationen ermittelt werden, teils als 3D-Erfassungen bezeichnet. Erfassungen, bei denen dies nicht der Fall ist, werden teils als 2D- Erfassung bezeichnet.

Zunächst Bezug nehmend auf Figur 2A wird der Fall einer 2D- Erfassung geschildert. In einem Schritt S1, der zum Beispiel manuell initiiert werden kann aber anschließend automatisch ausgeführt wird, wird mit dem wenigstens einen Überwachungssensor 26 wenigstens eine Aufnahme von vorzugsweise dem gesamten Arbeitsraum A getätigt. Eine dabei erzeugte zweidimensionale Bilddatei wird an die Steueranordnung 12 übermittelt. Wie vorstehend geschildert, ist auch aber möglich, mit einem bewegbaren Überwachungssensor 26 oder aber mit mehreren und beanstandet zueinander positionierten Überwachungssensoren 26 mehrere zweidimensionale Ansichten des Arbeitsraums A sowie darin positionierter Objekte 20 zu erfassen.

Im Schritt S2 führt die Steueranordnung 12 eine Analyse der erhaltenen Bilddatei oder Bilddateien durch. Genauer gesagt führt sie eine Objekterkennung nach jeglichen der im allgemeinen Beschreibungsteil geschilderten Varianten durch. Als Ergebnis der Objekterkennung wird ein Bereich (insbesondere ein Pixelbereich) innerhalb eines aufgenommenen Bildes identifiziert, der einem Objekt 20 zugeordnet ist.

Werden mehrere derartige Bereiche ermittelt, d. h. mehrere Objekte 20 erkannt, wird das Bild segmentiert und werden die einzelnen Segmente jeweils gemäß den nachstehend geschilderten Schritten weiterverarbeitet.

Als rein optionale Maßnahme und insbesondere im Anschluss an oder als ein Ergebnis der Objekterkennung kann für die erkannten Objekte 20 eine zumindest zweidimensionale Position und vorzugsweise auch eine zweidimensionale Orientierung ermittelt werden (insbesondere im Maschinenkoordinatensystem). Hierbei ist es vorteilhaft, wenn der Überwachungssensor 26 in Bezug auf dieses Koordinatensystem kalibriert ist und folglich Pixeln in einem aufgenommenen Bild ein zumindest zweidimensionaler Ort im Arbeitsraum (zum Beispiel innerhalb einer parallel zum Messtischoberfläche 11 verlaufenden Ebene) zuordenbar ist.

Bevorzugt erfolgt ausgehend von der zweidimensionalen Objekterfassung eine dreidimensionale Positions- und/oder Orientierungsermittlung spätestens dann, wenn in der nachstehend geschilderten Weise ein übereinstimmendes Objekt ermittelt wurde. Insbesondere kann dann festgestellt werden, welche aufgenommene zweidimensionale Ansicht des übereinstimmenden Objekts von dem Überwachungssensor 26 erfasst wurde und kann daraus auf die tatsächliche Position und/oder Orientierung des Objekts 20 im Arbeitsraum A geschlossen werden. Auch in diesem Fall ist es aber zu bevorzugen, dass in der vorstehend geschilderten Weise sozusagen eine vorläufige Position und/oder Orientierung anhand der aufgenommenen 2D-Ansicht ermittelt wird. Diese kann dann als Referenz dienen, um in Anbetracht der bekannten Form und Ausdehnung des übereinstimmen Objekts die tatsächliche dreidimensionale Position und/oder Orientierung des Objekts 20 zu ermitteln. Dieses Vorgehen kann dadurch erleichtert werden, dass im Schritt S1 (optional) mehrere zweidimensionale Ansichten des Objekts 20 erfasst wurden. Bezeichnet werden kann ein solches Vorgehen auch als 2D-Matching.

Prinzipiell ist es gemäß einer allgemeinen Ausführungsform von Anordnung und Verfahren möglich, im Anschluss an eine zweidimensionale Erfassung eine dreidimensionale Erfassung von dann bevorzugt bereits erkannten Objekten 20 durchzuführen. Dann könnte analog zum Vorgehen der nachstehend geschilderten Figur 2B mit dem Erzeugen oder Ermitteln dreidimensionaler Objektmodelle fortgesetzt werden.

Im vorliegenden Fall wird im Schritt S3 aber die Objektdatenbank 15 verwendet, um zu überprüfen, ob die aufgenommene Objektansicht einem der hinterlegten Objekte zuordenbar ist. Dies wird von der Steueranordnung 12 automatisch ausgeführt und kann gemäß jeglicher der im allgemeinen Beschreibungsteil geschilderten Varianten durchgeführt werden. In diesem Fall verdeutlicht sich noch einmal der Vorteil einer Mehrzahl unterschiedlicher aufgenommener Objektansichten, da hierdurch das Auffinden eines übereinstimmenden Objekts aus der Objektdatenbank 15 erleichtert wird.

Wurde ein übereinstimmendes Objekt aufgefunden (Pfeil Y), wird im Schritt S4 ein ebenfalls in der Objektdatenbank 15 hinterlegter und dem übereinstimmenden Objekt zugeordneter vordefinierter Sicherheitsbereich S automatisch identifiziert.

In einem Schritt S5, der auch vor oder parallel zu dem Schritt S4 ausgeführt werden könnte, werden eine vollständige dreidimensionale Position und/oder Orientierung des Objekts 20 in dem betrachteten Koordinatensystem ermittelt. In diesem Fall kann aus der Objektansicht im erfassten Kamerabild und in Kenntnis einer tatsächlichen Form und/oder dreidimensionaler Eigenschaften des Objekts, wie aus der Objektdatenbank 15 entnehmbar, auf eine Relativpositionierung von Überwachungssensor 26 und Objekt 20 geschlossen werden. Bei bekannter Position und Orientierung des Überwachungssensor 26 im betrachteten Koordinatensystem, kann dann Position und Orientierung des Objekts 20 ermittelt werden.

Im Schritt S6 wird darauf basierend auch eine einzunehmende Position und Orientierung des identifizierten vordefinierten Sicherheitsbereichs S im Arbeitsraum A ermittelt. Insbesondere kann dann der Sicherheitsbereich S derart in dem betrachteten Koordinatensystem positioniert und ausgerichtet werden, dass eine vordefinierte und bevorzugt ebenfalls in der Objektdatenbank 15 hinterlegte Relativanordnung von Sicherheitsbereich S und Objekt 20 eingehalten wird. Beispielsweise kann der Sicherheitsbereich S derart positioniert werden, dass ein geometrischer Mittelpunkt hiervon auf einer gemeinsamen (bevorzugt vertikalen) Achse mit dem geometrischen Mittelpunkt des Objekts 20 liegt. Ebenso kann er derart orientiert werden, dass er das Objekt 20 vorzugsweise vollständig einhüllt und/oder das bestimmte Eckpunkte von Objekt 20 und Sicherheitsbereich S übereinanderliegen oder Kanten parallel zueinander verlaufen.

Dieser entsprechend hinsichtlich Art/Gestalt, Position und Orientierung festgelegte Sicherheitsbereich S kann dann von der Steueranordnung 12 zwecks einer Bahnplanung (d. h. einer Fahrwegsgenerierung) verwendet werden.

Wurde hingegen kein übereinstimmendes Objekt im Schritt S3 ermittelt (Pfeil N), können verschiedene Maßnahmen zur Definition eines Sicherheitsbereichs S ergriffen werden (Schritt S7). Beispielsweise kann dann ein Benutzer aufgefordert werden, selbst nach einem etwaigen übereinstimmenden Objekt zu suchen. Alternativ kann der Benutzer aufgefordert werden, gemäß bekannten bisherigen Verfahren den Sicherheitsbereich S manuell einzurichten. Ferner alternativ kann sozusagen nachträglich eine 3D-Erfassung des Objekts 20 vorgenommen werden und kann darauf basierend ein Sicherheitsbereich S automatisch erzeugt werden (vorzugsweise ohne Abgleich mit der Objektdatenbank 15), wie dies nachstehend anhand von Figur 2B erläutert wird.

Dadurch, dass auf Basis einer aufwandsarmen 2D-Erfassung die Möglichkeit bereitgestellt wird, einen geeigneten Sicherheitsbereich S größtenteils oder vollständig automatisch zu definieren, wird die Wahrscheinlichkeit, dass manuelle Definitionen erforderlich sind, reduziert.

Bezugnehmend auf Figur 2B wird ein Ablauf erläutert, bei dem im Schritt S1 eine 3D-Erfassung eines bevorzugt überwiegenden Teils oder aber des gesamten Arbeitsraums A mittels jeglicher hierin geschilderter Varianten erfolgt.

Im Schritt S2 findet dann wiederum eine Objekterkennung innerhalb des 3D-Datensatzes gemäß jeglicher hierin geschilderter Varianten statt. Erneut kann derjenige Bereich innerhalb des Datensatzes (zum Beispiel ein Satz von 3D-Pixeln), der mit einem erkannten Objekt 20 übereinstimmt, entsprechend zusammengefasst, markiert und/oder gespeichert werden.

Im Rahmen von oder aber im Anschluss an Schritt S2 werden anhand der erfassten 3D-Daten eines erkannten Objekts 20 bevorzugt auch Informationen zu dessen dreidimensionaler Position und/oder Orientierung in dem betrachteten Koordinatensystem ermittelt (in dem der Überwachungssensor 26 dann vorteilhafterweise kalibriert ist).

Prinzipiell kann nun direkt mit dem nachstehend geschilderten Schritt S6 fortgesetzt werden, in dem anhand der erfassten 3D-Daten ein (virtuelles) Objektmodell automatisch erzeugt wird. Dieses kann dann mit einem Sicherheitsbereich S eingehüllt werden, der erforderliche Mindestabstände zu dem Objektmodell einhält. Auf diese Weise kann direkt und automatisch anhand der 3D-Erfassung ein geeigneter Sicherheitsbereich S erzeugt werden. Die erzielbare Güte ist hierbei aber maßgeblich von der Qualität der 3D-Erfassung abhängig.

Im vorliegenden Fall ist daher als eine bevorzugte Zwischenmaßnahme vorgesehen, im Schritt S3 analog zur Figur 2A zunächst zu überprüfen, ob in der Objektdatenbank 15 ein übereinstimmendes Objekt hinterlegt ist. Hierfür werden vorzugsweise die im Schritt S1 erfassten 3D-Daten verwendet. Es ist aber auch möglich, die bereits erwähnte Erzeugung eines Objektmodells durchzuführen und anhand dieses Objektmodells zu versuchen, ein hierzu übereinstimmendes Objekt bzw. Objektmodell innerhalb der Objektdatenbank 15 zu identifizieren.

Wurde ein übereinstimmendes Objekt ermittelt (Pfeil Y), wird im Schritt S4 ein diesem Objekt in der Objektdatenbank 15 zugeordneter Sicherheitsbereich S ermittelt.

In einem Schritt S5 wird auf Basis der bereits ermittelten Position und Orientierung des Objekts 20 die einzunehmende Position und Orientierung des vordefinierten Sicherheitsbereichs S im Arbeitsraum A ermittelt und somit festgelegt. Dieser entsprechend festgelegte Sicherheitsbereich S kann dann von der Steueranordnung 12 zwecks einer Bahnplanung (d. h. einer Fahrwegsgenerierung) verwendet werden.

Wird hingegen bei der Datenbanküberprüfung kein übereinstimmendes Objekt ermittelt (Pfeil N), kann gemäß dem geschilderten Schritt S6 ein Objektmodell und insbesondere ein Sicherheitsbereich S erzeugt. Dieser kann dann basierend auf dem Schritt S5 geeignet positioniert und orientiert werden.

## Patentansprüche

1. Verfahren zur Kollisionsvermeidung im Arbeitsraum (A) eines Koordinatenmessgeräts (60), mit:
- Erfassen von zumindest einem Teil eines Arbeitsraums (A) eines Koordinatenmessgeräts (60), in dem ein oder mehrere Objekte (20) positioniert sind, mit wenigstens einem optischen Überwachungssensor (26) und Erhalten einer Objektansicht;
- Durchführung einer Objekterkennung mit Hilfe der Objektansicht und Bestimmung der vorläufigen Position und/oder Orientierung der Objekte (20);
- für ein jedes Objekt (20) Identifizieren des zugehörigen in einer Objektdatenbank (15) hinterlegten vordefinierten Sicherheitsbereichs (S);
- Ermittlung der vollständigen dreidimensionalen Position und/oder Orientierung des Objekts (20) unter Verwendung der Objektansicht und Kenntnis einer tatsächlichen Form und/oder dreidimensionaler Eigenschaften des Objekts (20), wie aus der Objektdatenbank (15) entnehmbar;
- Festlegen von wenigstens einem virtuellen Sicherheitsbereich (S) auf Basis der Erfassung als der identifizierte vordefinierte Sicherheitsbereich (S), wobei eine einzunehmende Position und Orientierung des identifizierten vordefinierten Sicherheitsbereichs (S) im Arbeitsraum (A) ermittelt wird, wobei der Sicherheitsbereich (S) das Objekt (20) zumindest teilweise umgibt;
- zumindest vorrübergehendes Steuern von Bewegungen des Koordinatenmessgeräts (60), sodass das Koordinatenmessgerät (60) nicht in den festgelegten Sicherheitsbereich (S) eintritt.

2. Verfahren nach Anspruch 1,
**dadurch gekennzeichnet, dass** das Festlegen des virtuellen Sicherheitsbereichs (S) das Festlegen einer Lage und/oder wenigstens einer Abmessung des virtuellen Sicherheitsbereichs (S) umfasst.

3. Verfahren nach Anspruch 1,
**dadurch gekennzeichnet, dass** das Festlegen das Festlegen von mehreren Abmessungen des virtuellen Sicherheitsbereichs (S) umfasst und die festgelegten Abmessungen des Sicherheitsbereichs (S) größer als erfasste Abmessungen des Objekts (20) sind.

4. Verfahren nach einem der vorangehenden Ansprüche,
**dadurch gekennzeichnet, dass** auf Basis der Erfassung eine Objekterkennung durchgeführt wird, mittels der das Objekt (20) im erfassten Arbeitsraum (A) erkannt werden kann.

5. Verfahren nach Anspruch 4,
**dadurch gekennzeichnet, dass** die Objekterkennung auf Basis eines Differenzbildes durchgeführt wird, wobei das Differenzbild die Differenz enthält zwischen einem ersten Bild, das einen objektfreien Arbeitsraum (A) abbildet, und einem zweiten Bild, das den Arbeitsraum (A) mit dem darin enthaltenen Objekt (20) abbildet.

6. Verfahren nach einem der vorangehenden Ansprüche,
**dadurch gekennzeichnet, dass** überprüft wird, ob für ein erfasstes Objekt (20) ein Sicherheitsbereich (S) vordefiniert ist und wenn dies der Fall ist, Festlegen des virtuellen Sicherheitsbereichs (S) unter Berücksichtigung des vordefinierten Sicherheitsbereichs (S).

7. Verfahren nach Anspruch 6,
**dadurch gekennzeichnet, dass** der vordefinierte Sicherheitsbereich (S) als virtueller Bereich um ein Objektmodell und insbesondere um ein CAD-Modell eines Objekts (20) definiert ist.

8. Verfahren nach Anspruch 6 oder 7,
**dadurch gekennzeichnet, dass** das Überprüfen, ob für ein erfasstes Objekt (20) ein Sicherheitsbereich (S) vordefiniert ist, mittels einer Objektdatenbank (15) erfolgt, und wenn eine Übereinstimmung wenigstens einer erfassten Objekteigenschaft mit einem Eintrag der Objektdatenbank (15) ermittelt wird, ein vordefinierter Sicherheitsbereich (S) ausgewählt wird, der einem übereinstimmenden Eintrag aus der Objektdatenbank (15) zugeordnet ist.

9. Verfahren nach Anspruch 8,
**dadurch gekennzeichnet, dass** im Rahmen der Erfassung wenigstens eine Objektansicht erfasst und diese Ansicht mit der Objektdatenbank (15) verglichen wird.

10. Verfahren nach Anspruch 8 oder 9,
**dadurch gekennzeichnet, dass** eine festzulegende Position und/oder Orientierung des Sicherheitsbereichs (S) auf Basis des übereinstimmenden Objekts ermittelt wird.

11. Verfahren nach einem der Ansprüche 6 bis 10,
**dadurch gekennzeichnet, dass** zum Festlegen des virtuellen Sicherheitsbereichs (S) wenigstens eine Abmessung des vordefinierten Sicherheitsbereichs (S) anhand wenigstens einer erfassten Objektabmessung anpassbar ist.

12. Verfahren nach einem der vorangehenden Ansprüche,
**dadurch gekennzeichnet, dass** auf Basis der Erfassung dreidimensionale Eigenschaften des Objekts (20) ermittelt werden.

13. Verfahren nach Anspruch 12,
**dadurch gekennzeichnet, dass** auf Basis der dreidimensionalen Eigenschaften des Objekts (20) ein dreidimensionales Modell des Objekts (20) erzeugt und/oder der Sicherheitsbereich (S) festgelegt wird.

14. Anordnung (11), mit:
- einem Koordinatenmessgerät (60),
- wenigstens einem optischen Überwachungssensor (26), der dazu eingerichtet ist, zumindest einen Teil eines Arbeitsraums (A) des Koordinatenmessgeräts (60) zu erfassen, in dem ein oder mehrere Objekte (20) positionierbar sind, und eine Objektansicht zu erhalten; und
- einer Steueranordnung (12), die dazu eingerichtet ist,
∘ eine Objekterkennung mit Hilfe der Objektansicht durchzuführen und eine vorläufige Position und/oder Orientierung der Objekte (20) zu bestimmen,
∘ für ein jedes Objekt (20) einen zugehörigen in einer Objektdatenbank (15) hinterlegten vordefinierten Sicherheitsbereich (S) zu identifizieren,
∘ die vollständige dreidimensionale Position und/oder Orientierung des Objekts (20) unter Verwendung der Objektansicht und Kenntnis einer tatsächlichen Form und/oder dreidimensionaler Eigenschaften des Objekts (20), wie aus der Objektdatenbank (15) entnehmbar, zu ermitteln,
∘ wenigstens einen virtuellen Sicherheitsbereich (S) auf Basis der Erfassung als den identifizierten vordefinierten Sicherheitsbereich (S) festzulegen, wobei eine einzunehmende Position und Orientierung des identifizierten vordefinierten Sicherheitsbereichs (S) im Arbeitsraum (A) ermittelt wird, wobei der Sicherheitsbereich (S) das Objekt (20) zumindest teilweise umgibt, und
∘ zumindest vorübergehend Bewegungen des Koordinatenmessgeräts (60) zu steuern, sodass das Koordinatenmessgerät (60) nicht in den festgelegten Sicherheitsbereich (S) eintritt.

## Claims

1. Method for avoiding a collision in the working space (A) of a coordinate measuring machine (60), comprising:
- capturing at least one part of a working space (A) of a coordinate measuring machine (60), in which one or more objects (20) are positioned, using at least one optical monitoring sensor (26), and obtaining an object view;
- performing object recognition using the object view, and determining the preliminary position and/or orientation of the objects (20);
- for each object (20), identifying the associated predefined safety area (S) stored in an object database (15);
- determining the complete three-dimensional position and/or orientation of the object (20) using the object view and knowledge of an actual shape and/or three-dimensional properties of the object (20), as can be gathered from the object database (15);
- defining at least one virtual safety area (S) on the basis of the capture as the identified predefined safety area (S), wherein a position and orientation to be assumed by the identified predefined safety area (S) in the working space (A) are determined, wherein the safety area (S) surrounds the object (20) at least partially;
- at least temporarily controlling movements of the coordinate measuring machine (60) such that the coordinate measuring machine (60) does not enter the defined safety area (S).

2. Method according to Claim 1,
**characterized in that** defining the virtual safety area (S) comprises defining a location and/or at least one dimension of the virtual safety area (S).

3. Method according to Claim 1,
**characterized in that** defining comprises defining a plurality of dimensions of the virtual safety area (S), and the defined dimensions of the safety area (S) are larger than captured dimensions of the object (20).

4. Method according to one of the preceding claims,
**characterized in that** object recognition is carried out on the basis of the capture and can be used to recognize the object (20) in the captured working space (A).

5. Method according to Claim 4,
**characterized in that** the object recognition is carried out on the basis of a difference image, wherein the difference image contains the difference between a first image, which depicts an object-free working space (A), and a second image, which depicts the working space (A) with the object (20) contained therein.

6. Method according to one of the preceding claims,
**characterized in that** it is checked whether a safety area (S) is predefined for a captured object (20) and, if this is the case, the virtual safety area (S) is defined taking into account the predefined safety area (S).

7. Method according to Claim 6,
**characterized in that** the predefined safety area (S) is defined as a virtual area around an object model and in particular around a CAD model of an object (20).

8. Method according to Claim 6 or 7,
**characterized in that** checking whether a safety area (S) is predefined for a captured object (20) is carried out by means of an object database (15), and, if a match between at least one captured object property and an entry in the object database (15) is determined, a predefined safety area (S) assigned to a matching entry from the object database (15) is selected.

9. Method according to Claim 8,
**characterized in that** at least one object view is captured during the capture and this view is compared with the object database (15).

10. Method according to Claim 8 or 9,
**characterized in that** a position and/or orientation of the safety area (S) to be defined is/are determined on the basis of the matching object.

11. Method according to one of Claims 6 to 10,
**characterized in that**, in order to define the virtual safety area (S), at least one dimension of the predefined safety area (S) can be adapted based on at least one captured object dimension.

12. Method according to one of the preceding claims,
**characterized in that** three-dimensional properties of the object (20) are determined on the basis of the capture.

13. Method according to Claim 12,
**characterized in that** a three-dimensional model of the object (20) is generated and/or the safety area (S) is defined on the basis of the three-dimensional properties of the object (20).

14. Arrangement (11), comprising:
- a coordinate measuring machine (60),
- at least one optical monitoring sensor (26) which is configured to capture at least one part of a working space (A) of the coordinate measuring machine (60), in which one or more objects (20) can be positioned, and to obtain an object view; and
- a control arrangement (12) which is configured
∘ to perform object recognition using the object view and determine a preliminary position and/or orientation of the objects (20),
∘ for each object (20), to identify an associated predefined safety area (S) stored in an object database (15),
∘ to determine the complete three-dimensional position and/or orientation of the object (20) using the object view and knowledge of an actual shape and/or three-dimensional properties of the object (20), as can be gathered from the object database (15),
∘ to define at least one virtual safety area (S) on the basis of the capture as the identified predefined safety area (S), wherein a position and orientation to be assumed by the identified predefined safety area (S) in the working space (A) are determined, wherein the safety area (S) surrounds the object (20) at least partially, and
∘ to at least temporarily control movements of the coordinate measuring machine (60) such that the coordinate measuring machine (60) does not enter the defined safety area (S).

## Revendications

1. Procédé d'évitement de collision dans l'espace de travail (A) d'un appareil de mesure de coordonnées (60), comprenant :
- la capture d'au moins une partie d'un espace de travail (A) d'un appareil de mesure de coordonnées (60) dans lequel un ou plusieurs objets (20) sont positionnés, à l'aide d'au moins un capteur de surveillance optique (26), et l'obtention d'une vue d'objet ;
- la réalisation d'une reconnaissance d'objet à l'aide de la vue d'objet et la détermination de la position et/ou de l'orientation préliminaire des objets (20) ;
- pour chaque objet (20), l'identification de la zone de sécurité (S) prédéfinie associée et mémorisée dans une base de données d'objets (15) ;
- la détermination de la position et/ou de l'orientation tridimensionnelle complète de l'objet (20) à l'aide de la vue d'objet et de la connaissance d'une forme réelle et/ou de propriétés tridimensionnelles de l'objet (20), pouvant être extraites de la base de données d'objets (15) ;
- l'établissement d'au moins une zone de sécurité (S) virtuelle sur la base de la capture en tant que zone de sécurité (S) prédéfinie identifiée, une position et une orientation devant être adoptées par la zone de sécurité (S) prédéfinie identifiée dans l'espace de travail (A) étant déterminées, la zone de sécurité (S) entourant l'objet (20) au moins partiellement ;
- la commande au moins temporaire de mouvements de l'appareil de mesure de coordonnées (60) de façon que l'appareil de mesure de coordonnées (60) ne pénètre pas dans la zone de sécurité (S) établie.

2. Procédé selon la revendication 1,
**caractérisé en ce que** l'établissement de la zone de sécurité (S) virtuelle comprend l'établissement d'une position et/ou d'au moins une dimension de la zone de sécurité (S) virtuelle.

3. Procédé selon la revendication 1,
**caractérisé en ce que** l'établissement comprend l'établissement de plusieurs dimensions de la zone de sécurité (S) virtuelle et **en ce que** les dimensions établies de la zone de sécurité (S) sont supérieures aux dimensions détectées de l'objet (20).

4. Procédé selon l'une des revendications précédentes,
**caractérisé en ce qu'**une reconnaissance d'objet est réalisée sur la base de la capture et peut être utilisée pour reconnaître l'objet (20) dans l'espace de travail (A) capturé.

5. Procédé selon la revendication 4,
**caractérisé en ce que** la reconnaissance d'objet est réalisée sur la base d'une image de différence, l'image de différence contenant la différence entre une première image, qui représente un espace de travail (A) sans objet, et une deuxième image, qui représente l'espace de travail (A) avec l'objet (20) contenu dans celui-ci.

6. Procédé selon l'une des revendications précédentes,
**caractérisé en ce qu'**il est vérifié si une zone de sécurité (S) est prédéfinie pour un objet (20) capturé et, si tel est le cas, **en ce que** la zone de sécurité (S) virtuelle est établie en tenant compte de la zone de sécurité (S) prédéfinie.

7. Procédé selon la revendication 6,
**caractérisé en ce que** la zone de sécurité (S) prédéfinie est définie comme étant une zone virtuelle autour d'un modèle d'objet et en particulier autour d'un modèle CAD d'un objet (20).

8. Procédé selon la revendication 6 ou 7,
**caractérisé en ce que** la vérification déterminant si une zone de sécurité (S) est prédéfinie pour un objet (20) capturé est effectuée au moyen d'une base de données d'objets (15), et si une concordance d'au moins une propriété d'objet capturée avec une entrée de la base de données d'objets (15) est déterminée, une zone de sécurité (S) prédéfinie qui est associée à une entrée concordante de la base de données d'objets (15) est sélectionnée.

9. Procédé selon la revendication 8,
**caractérisé en ce qu'**au moins une vue d'objet est capturée dans le cadre de la capture et **en ce que** cette vue est comparée à la base de données d'objets (15).

10. Procédé selon la revendication 8 ou 9,
**caractérisé en ce qu'**une position et/ou une orientation à établir de la zone de sécurité (S) est déterminée sur la base de l'objet concordant.

11. Procédé selon l'une des revendications 6 à 10,
**caractérisé en ce que**, pour l'établissement de la zone de sécurité (S) virtuelle, au moins une dimension de la zone de sécurité (S) prédéfinie peut être adaptée sur la base d'au moins une dimension d'objet capturée.

12. Procédé selon l'une des revendications précédentes,
**caractérisé en ce que** des propriétés tridimensionnelles de l'objet (20) sont déterminées sur la base de la capture.

13. Procédé selon la revendication 12,
**caractérisé en ce qu'**un modèle tridimensionnel de l'objet (20) est généré et/ou la zone de sécurité (S) est établie sur la base des propriétés tridimensionnelles de l'objet (20).

14. Agencement (11), comprenant :
- un appareil de mesure de coordonnées (60),
- au moins un capteur de surveillance optique (26) qui est conçu pour capturer au moins une partie d'un espace de travail (A) de l'appareil de mesure de coordonnées (60) dans lequel un ou plusieurs objets (20) peuvent être positionnés, et pour obtenir une vue d'objet ; et
- un agencement de commande (12), qui est conçu pour :
o réaliser une reconnaissance d'objet à l'aide de la vue d'objet et déterminer la position et/ou l'orientation préliminaire des objets (20) ;
o pour chaque objet (20), identifier une zone de sécurité (S) prédéfinie associée et mémorisée dans une base de données d'objets (15),
o déterminer la position et/ou l'orientation tridimensionnelle complète de l'objet (20) à l'aide de la vue d'objet et de la connaissance d'une forme réelle et/ou de propriétés tridimensionnelles de l'objet (20), pouvant être extraites de la base de données d'objets (15),
o établir au moins une zone de sécurité (S) virtuelle sur la base de la capture en tant que zone de sécurité (S) prédéfinie identifiée, une position et une orientation devant être adoptées par la zone de sécurité (S) prédéfinie identifiée dans l'espace de travail (A) étant déterminées, la zone de sécurité (S) entourant l'objet (20) au moins partiellement, et
o commander au moins temporairement des mouvements de l'appareil de mesure de coordonnées (60) de façon que l'appareil de mesure de coordonnées (60) ne pénètre pas dans la zone de sécurité (S) établie.
